# FASCICULE DE BREVET EUROPEEN

(11) **EP 3 578 869 B1**
(45) Date de publication et mention de la délivrance du brevet: **11.11.2020**
(21) Numéro de dépôt: 19178329.9
(22) Date de dépôt: 05.06.2019
(51) Int. Cl.: F17C 5/00

(54) **PROCEDE DE GESTION D'UN SYSTEME DE DISTRIBUTION D'UN FLUIDE D'INTERET**
VERWALTUNGSSVERFAHREN EINES VERTEILUNGSSYSTEMS EINES GEWÜNSCHTEN FLUIDS
METHOD FOR MANAGING A DISTRIBUTION SYSTEM FOR A FLUID OF INTEREST

(30) Priorité: 08.06.2018 FR 1854997
(43) Date de publication de la demande: 11.12.2019
(73) Titulaire: Commissariat à l'Énergie Atomique et aux Énergies Alternatives, 75015 Paris cedex (FR)
(72) Inventeur: THOMAS, Sigrid, 38054 Grenoble Cedex 9 (FR); BOUIX, Didier, 38054 Grenoble Cedex 9 (FR); POIROT-CROUVEZIER, Jean-Philippe, 38054 Grenoble Cedex 9 (FR)
(74) Mandataire: INNOV-GROUP

(56) Documents cités:
- EP-A1- 1 691 127
- EP-B1- 2 390 550
- GB-A- 2 385 582
- US-A1- 2009 050 630
- US-A1- 2011 284 120

## Description

### DOMAINE TECHNIQUE

Le domaine de l'invention est celui des réseaux de distribution d'un fluide d'intérêt, par exemple d'hydrogène gazeux ou liquide, à destination de véhicules utilisateurs, et porte plus précisément sur un procédé de gestion d'un système de distribution.

### ÉTAT DE LA TECHNIQUE ANTÉRIEURE

Les réseaux de distribution d'un fluide énergétique d'intérêt, par exemple d'hydrogène, destinés à alimenter en hydrogène des véhicules utilisateurs, peuvent comporter une unité de production d'hydrogène et plusieurs stations de distribution. Les stations de distribution sont régulièrement approvisionnées en hydrogène par exemple par route, voie ferrée ou gazoduc. Elles peuvent ainsi être approvisionnées par des camions-citernes dédiés, ou être situées à proximité d'une telle unité de production, par exemple une usine de reformage ou un dispositif du type électrolyseur.

Les véhicules utilisateurs sont des véhicules dits clients dans le sens où ils viennent remplir leur réservoir d'hydrogène à l'une ou l'autre des stations de distribution. Le remplissage du réservoir d'un véhicule client peut être effectué à partir du réservoir d'hydrogène en surpression de l'une des stations de distribution. A titre d'exemple, un réservoir de véhicule destiné à contenir de l'hydrogène à 350 bars peut être rempli à partir d'un réservoir de station contenant de l'hydrogène à 450 bars.

Cela nécessite que les réservoirs des stations de distribution contiennent en permanence une grande quantité d'hydrogène devant celle des réservoirs des véhicules clients. Il peut alors être nécessaire de disposer d'une flotte importante de camions-citernes qui assurent l'approvisionnement régulier des stations de distribution.

De plus, il peut être nécessaire de comprimer l'hydrogène produit pour le porter à la pression du réservoir de distribution, mais également pour le conditionner dans le cas d'un transport dans les camions-citernes. Or, l'utilisation des camions-citernes tout comme les différentes étapes de compression sont particulièrement coûteuses en termes de coûts et d'énergie. Par ailleurs, l'utilisation de camions-citernes nécessite la mise en place d'une distribution dédiée qui s'avère coûteuse, notamment en termes de poids par rapport à l'énergie embarquée du fluide d'intérêt, à cause des réservoirs nécessairement épais pour résister à la pression. En outre, les camions-citernes sont généralement encombrants et il est nécessaire de ménager des accès de taille significative à proximité des stations, ce qui peut en pratique limiter le nombre d'emplacements possibles pour l'implantation de telles stations de distribution.

Le document EP1691127A1 décrit un procédé de gestion d'un système de distribution d'hydrogène, dans lequel les véhicules sont des véhicules de livraison destinés uniquement à approvisionner les stations à partir d'un centre de distribution.

### EXPOSÉ DE L'INVENTION

L'invention a pour objectif de remédier au moins en partie aux inconvénients de l'art antérieur, et plus particulièrement de proposer un procédé de gestion d'un système de distribution d'un fluide d'intérêt, par exemple d'hydrogène, permettant de minimiser les pertes énergétiques liées à l'approvisionnement des stations de distribution.

Pour cela, l'objet de l'invention est un procédé de gestion d'un système de distribution d'un fluide d'intérêt comportant : une pluralité de stations de distribution du fluide d'intérêt, comportant chacune au moins un réservoir du fluide d'intérêt, et une jauge de contenance dudit réservoir de station ; une pluralité de véhicules dits référencés, comportant chacun au moins un réservoir du fluide d'intérêt, une jauge de contenance dudit réservoir de véhicule, une pile à combustible alimentée par ledit réservoir de véhicule, et un dispositif de communication adapté à recevoir une requête d'approvisionnement ; les stations de distribution et les véhicules référencés étant configurés pour permettre le remplissage des réservoirs de véhicule à partir des réservoirs de station, et l'approvisionnement des réservoirs de station à partir des réservoirs de véhicule.

Le procédé comporte les étapes suivantes :
a. mesure, pour chaque station de distribution, d'au moins une valeur de contenance du réservoir de station, et détermination d'une valeur d'une première grandeur représentative de la contenance du réservoir de station à partir d'au moins la valeur de contenance mesurée,
b. identification d'une station de distribution dite déficitaire, par comparaison entre au moins les valeurs de la première grandeur représentative et au moins un premier seuil prédéterminé représentatif d'une station de distribution déficitaire ;
c. mesure, pour chaque véhicule référencé, d'au moins une valeur de contenance du réservoir de véhicule, et détermination d'une valeur d'une deuxième grandeur représentative de la contenance du réservoir de véhicule à partir d'au moins la valeur de contenance mesurée,
d. identification d'un véhicule référencé dit approvisionneur, par comparaison entre au moins les valeurs de la deuxième grandeur représentative et au moins un deuxième seuil prédéterminé représentatif d'un véhicule référencé approvisionneur ;
e. envoi au véhicule référencé approvisionneur d'une requête d'approvisionnement du réservoir de la station de distribution déficitaire à partir de son réservoir de véhicule.

Certains aspects préférés mais non limitatifs de ce procédé de gestion sont les suivants.

Le système de gestion peut comporter en outre un dispositif de gestion comprenant :
∘ un dispositif de communication adapté à recevoir des valeurs émises par les stations de distribution et par les véhicules référencés et à envoyer une requête d'approvisionnement aux véhicules référencés, et
∘ un dispositif électronique de traitement, connecté au dispositif de communication, comportant un processeur et une mémoire, et adapté à identifier une station de distribution déficitaire lors de l'étape b, et un véhicule référencé approvisionneur lors de l'étape d ;
les stations de distributions comportant en outre un dispositif de communication adapté à transmettre au dispositif de gestion une valeur représentative de la contenance mesurée par la jauge de station, et le dispositif de communication des véhicules référencés étant en outre adapté à transmettre au dispositif de gestion une valeur représentative de la contenance mesurée par la jauge de véhicule.

Lors de l'étape b, une station de distribution peut être identifiée comme étant déficitaire lorsqu'au moins une valeur de la première grandeur représentative associée à ladite station de distribution est inférieure ou égale à la première valeur seuil prédéterminée.

Lors de l'étape d, un véhicule référencé peut être identifié comme étant approvisionneur lorsqu'au moins une valeur de la deuxième grandeur représentative associée audit véhicule référencé est supérieure ou égale à la deuxième valeur seuil prédéterminée.

La première grandeur et/ou la deuxième grandeur peuvent être représentatives de la contenance à un instant de mesure ou à un instant ultérieur.

Par ailleurs, l'étape c peut comporter également la détermination, pour chaque véhicule référencé, des trajets futurs prévus ainsi que de la date desdits trajets futurs ; et l'étape d d'identification d'un véhicule référencé approvisionneur peut être effectuée, en outre, à partir d'un critère supplémentaire de minimisation d'une distance de la station de distribution déficitaire vis-à-vis desdits différents trajets futurs prévus et/ou à partir d'un critère supplémentaire d'identification portant sur la date desdits trajets futurs.

Par ailleurs, le fluide d'intérêt peut être un gaz comprimé et les réservoirs de station autoriser une pression maximale supérieure à une pression maximale des réservoirs de véhicule. L'étape d peut comporter en outre un calcul d'une différence de pression entre la pression maximale de la station de distribution déficitaire et la valeur de contenance mesurée de chaque véhicule référencé, suivi de l'identification d'un véhicule référencé approvisionneur à partir d'un critère supplémentaire de minimisation de la différence de pression. Et le procédé peut comporter en outre une étape d'approvisionnement de la station de distribution déficitaire en fluide d'intérêt par le véhicule référencé approvisionneur, au cours de laquelle le fluide d'intérêt est comprimé par un compresseur en passant du réservoir de véhicule au réservoir de station.

La station de distribution déficitaire peut comporter au moins un premier réservoir dit de réserve relié à un deuxième réservoir dit de distribution par l'intermédiaire d'un compresseur, le réservoir de réserve autorisant une pression maximale du fluide d'intérêt inférieure à la pression maximale dudit réservoir de distribution. De plus, lors de l'étape d'approvisionnement, le réservoir de distribution peut être approvisionné en fluide d'intérêt par le véhicule référencé approvisionneur via le compresseur sans approvisionner au préalable le réservoir de réserve.

Par ailleurs, le fluide d'intérêt peut être un gaz comprimé et les réservoirs de station autoriser une pression maximale supérieure à une pression maximale des réservoirs de véhicule. La station de distribution déficitaire peut comporter au moins un premier réservoir dit de réserve, relié à un deuxième réservoir dit de distribution par l'intermédiaire d'un compresseur, le réservoir de réserve autorisant une pression maximale du fluide d'intérêt inférieure à la pression maximale dudit réservoir de distribution. L'étape d peut comporter en outre un calcul d'une deuxième différence de pression entre la pression maximale du réservoir de réserve de la station de distribution déficitaire et la valeur de contenance mesurée de chaque véhicule référencé, suivi de l'identification d'un véhicule référencé approvisionneur à partir d'un critère supplémentaire de minimisation de la deuxième différence de pression. Lors de l'étape e, la requête envoyée peut inviter le véhicule référencé approvisionneur à approvisionner le réservoir de réserve en fluide d'intérêt.

Le fluide d'intérêt contenu dans les réservoirs de station et dans les réservoirs de véhicule peut être un liquide. Lors d'une étape d'approvisionnement de la station de distribution déficitaire par le véhicule référencé approvisionneur, le réservoir de véhicule peut être connecté au réservoir de station de manière à permettre l'écoulement du fluide d'intérêt au moins par gravité.

L'invention porte également sur un système de distribution d'un fluide d'intérêt, comportant :
∘ une pluralité de stations de distribution du fluide d'intérêt comportant chacune au moins un réservoir du fluide d'intérêt, une jauge de contenance connectée dudit réservoir de station, et un dispositif de communication adapté à transmettre une valeur représentative de la contenance mesurée par la jauge de station ;
∘ une pluralité de véhicules dits référencés comportant chacun au moins un réservoir du fluide d'intérêt, une jauge de contenance dudit réservoir de véhicule, une pile à combustible alimentée par ledit réservoir de véhicule, et un dispositif de communication adapté à transmettre une valeur représentative de la contenance mesurée par la jauge de véhicule et à recevoir une requête d'approvisionnement ;
∘ les stations de distribution et les véhicules référencés étant configurés pour permettre le remplissage des réservoirs de véhicule à partir des réservoirs de station, et l'approvisionnement des réservoirs de station à partir des réservoirs de véhicule ;
∘ un dispositif de gestion comprenant un dispositif de communication adapté à recevoir des valeurs émises par les stations de distribution et par les véhicules référencés et à envoyer une requête d'approvisionnement aux véhicules référencés, et un dispositif électronique de traitement, connecté au dispositif de communication, et comportant un processeur et une mémoire, et adapté à identifier une station de distribution déficitaire à partir de valeurs reçues par les jauges de station, et un véhicule référencé approvisionneur à partir de valeurs reçues par les jauges de véhicule.

Chaque réservoir de station peut comporter une sortie destinée à fournir du fluide d'intérêt aux véhicules référencés, et une entrée reliée à un compresseur, l'entrée étant destinée à recevoir du fluide d'intérêt d'un véhicule référencé approvisionneur par l'intermédiaire du compresseur.

Chaque station de distribution peut comporter au moins un premier réservoir dit de réserve relié à un deuxième réservoir dit de distribution par l'intermédiaire dudit compresseur, ce dernier étant en outre adapté à transférer du fluide du réservoir de réserve au réservoir de distribution en le portant à une pression maximale prédéterminée.

Le système de distribution peut comporter un organe de remplissage et un organe d'approvisionnement adaptés à assurer un transfert du fluide d'intérêt entre une station de distribution et un véhicule référencé, lesdits organes de remplissage et d'approvisionnement comportant au moins un tuyau pouvant être assemblé en une extrémité à un réservoir de station et pouvant être assemblé en l'autre extrémité au réservoir de véhicule.

Les stations de distribution et les véhicules référencés peuvent comporter au moins une vanne commandable pour autoriser ou non l'écoulement du fluide d'intérêt dans le tuyau.

Les organes de remplissage et d'approvisionnement peuvent être distincts l'un de l'autre, et comporter au moins une vanne monodirectionnelle adaptée l'une à autoriser l'écoulement du fluide d'intérêt uniquement du réservoir de station vers le réservoir de véhicule, et l'autre à autoriser l'écoulement du fluide d'intérêt uniquement du réservoir de véhicule vers le réservoir de station.

Les organes de remplissage et d'approvisionnement peuvent être confondus l'un avec l'autre, l'organe de remplissage et approvisionnement comportant une vanne bidirectionnelle adaptée à autoriser l'écoulement du fluide d'intérêt du réservoir de station vers le réservoir de véhicule, et du réservoir de véhicule vers un réservoir de station.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1 est une vue schématique et partielle d'un système de distribution d'un fluide d'intérêt selon un mode de réalisation ;
la figure 2 est une vue schématique et partielle du système de distribution d'un fluide d'intérêt selon le mode de réalisation illustrant plus en détail les différents éléments du système de distribution ;
les figures 3A, 3B et 3C sont des vues schématiques et partielles de différentes variantes d'une station de distribution et d'un véhicule utilisateur munis d'un organe de remplissage et d'un organe d'approvisionnement, ces organes étant distincts sur la fig.3A et 3C et confondus sur la fig.3B ;
la figure 4A illustre de manière partielle et schématique un exemple de réservoir de réserve d'une station de distribution et un réservoir d'un véhicule utilisateur, les réservoirs étant reliés l'un à l'autre par un organe d'approvisionnement par détente du fluide d'intérêt contenu dans le réservoir utilisateur, et la figure 4B illustre un diagramme illustrant l'évolution temporelle de la pression du fluide d'intérêt à différents instants de l'approvisionnement.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près. Par ailleurs, l'expression « comportant un » doit être comprise comme « comportant au moins un », sauf indication contraire.

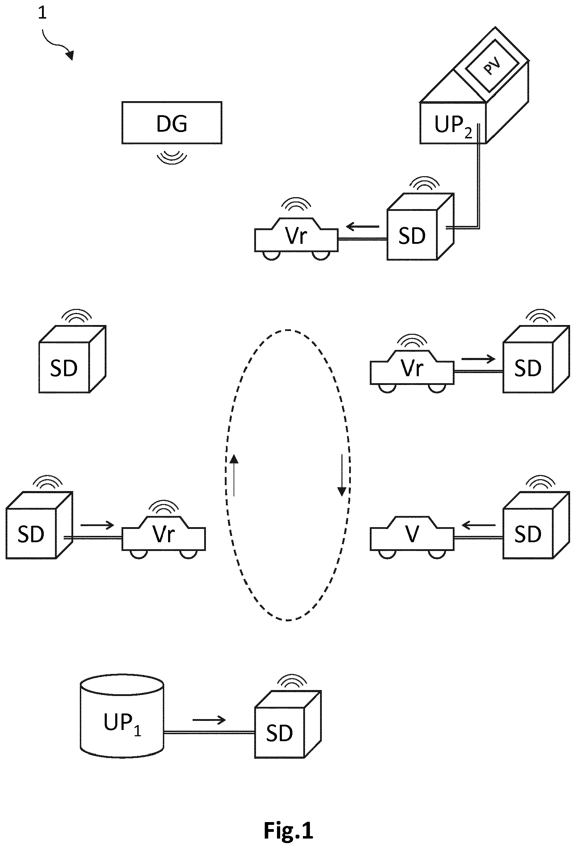

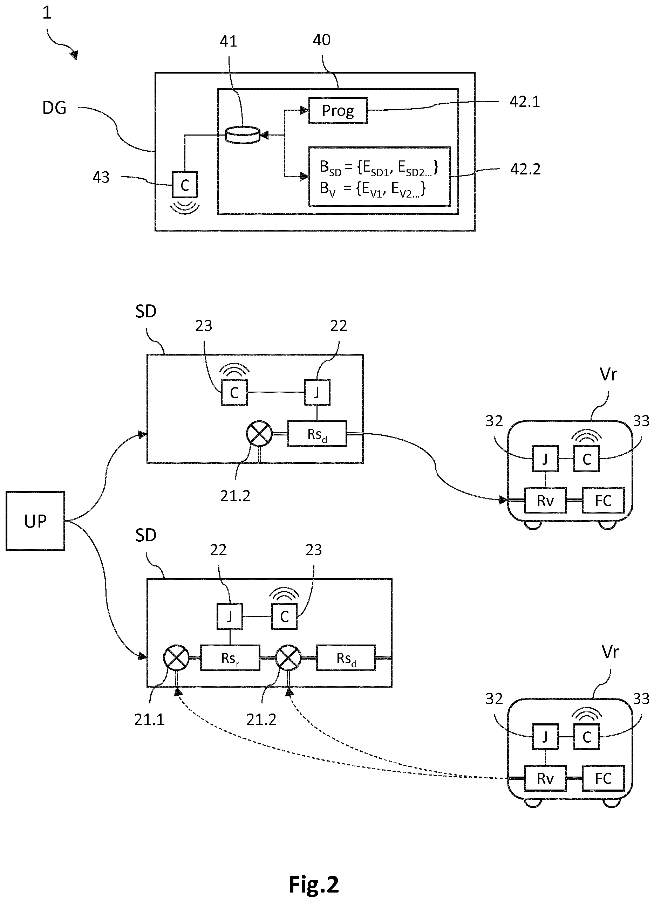

La figure 1 est une vue schématique et partielle d'un système de distribution 1 d'un fluide d'intérêt selon un mode de réalisation. La figure 2 est une vue schématique et partielle du système de distribution 1 d'un fluide d'intérêt selon le mode de réalisation illustrant plus en détail les différents éléments du système de distribution 1. Le fluide d'intérêt est un fluide énergétique contenant de l'hydrogène nécessaire au fonctionnement d'une pile à combustible. Il peut ainsi s'agir d'un fluide réactif (gaz ou liquide) introduit directement dans la pile à combustible, par exemple de l'hydrogène. Il peut également s'agir d'un fluide à partir duquel le fluide réactif est obtenu, par exemple du méthanol permettant d'obtenir de l'hydrogène par une technologie embarquée de reformage. Dans la suite de la description, le fluide énergétique est de l'hydrogène.

D'une manière générale, le système de distribution 1 d'hydrogène comporte :
∘ une ou plusieurs unités de production UP du fluide d'intérêt ;
∘ plusieurs stations de distribution SD ;
∘ des véhicules référencés Vr ;
∘ un dispositif de gestion DG du système de distribution 1.

Les stations de distribution SD et les véhicules Vr, lesquels sont référencés auprès du dispositif de gestion DG, sont adaptés à échanger du fluide d'intérêt de la station de distribution SD vers le véhicule référencé Vr et inversement. Lorsque le véhicule référencé Vr reçoit du fluide d'intérêt de la station de distribution SD, il est alors appelé véhicule référencé client Vr_{c}. Inversement, lorsque la station de distribution SD est approvisionnée en fluide d'intérêt à partir d'un véhicule référencé Vr, ce dernier est alors appelé véhicule référencé approvisionneur Vrₐ. Par ailleurs, d'autres véhicules V, non référencés auprès du dispositif de gestion DG, peuvent recevoir du fluide d'intérêt des stations de distribution SD, mais ne sont pas adaptés à approvisionner lesdites stations SD en fluide d'intérêt.

Les unités de production UP sont des unités spécialisées dans la production du fluide d'intérêt, éventuellement en grande quantité, et peuvent être distantes des stations de distribution SD ou être situées à l'intérieur d'une station de distribution SD. Dans le cas de l'hydrogène, la production peut être issue du reformage de produits pétroliers dont le gaz naturel, de l'électrolyse de l'eau, de la dissociation thermique de l'eau, la transformation de la biomasse, ou autre. Les unités peuvent être de différentes tailles ou de différentes capacités de production du fluide d'intérêt. Ainsi, la fig.1 représente une unité de production UP₁ capable de produire du fluide d'intérêt en grande quantité, et une unité de production UP2 produisant du fluide d'intérêt en plus petite quantité, par exemple par électrolyse à partir d'une maison individuelle en autogestion produisant de l'électricité par panneaux photovoltaïques.

Les unités de production UP sont reliées aux stations de distribution SD par des moyens d'approvisionnement, permettant ainsi d'approvisionner les stations de distribution SD en fluide d'intérêt, par exemple par route, chemin de fer, voie d'eau, voire gazoduc, ou tout autre moyen équivalent. Dans le cas d'un transport par route, les moyens d'approvisionnement peuvent comporter une flotte de camions-citernes adaptés à transporter l'hydrogène en phase liquide ou en phase gazeuse. Lorsqu'il est en phase liquide et dans le cas d'une distribution sous forme de gaz comprimé, l'hydrogène peut être issu d'un liquéfacteur de l'unité de production UP, puis transporté dans des camions à citernes cryogéniques jusqu'à un évaporateur de la station de distribution SD pour une distribution en phase gazeuse par exemple à 450 bars ou 700 bars. Lorsqu'il est en phase gazeuse, l'hydrogène peut être, entre autres, transporté dans des bouteilles d'hydrogène comprimé par exemple à 200 bars par camions jusqu'aux stations de distribution SD où il pourra être stocké en attente d'être comprimé, à la demande, à plus haute pression. D'autres types de conditionnement en vue du transport et de l'approvisionnement des stations de distribution SD sont possibles comme des camions de type porte-tubes (*tube trailer,* en anglais) transportant jusqu'à 500kg d'hydrogène à une pression de 200 à 500 bars.

Les stations de distribution SD sont adaptées à être approvisionnées en fluide d'intérêt, et à fournir le fluide d'intérêt à tous types de véhicules, qu'il s'agisse des véhicules référencés Vr ou des véhicules non référencés V. Elles sont en outre adaptées à être approvisionnées en fluide d'intérêt par les véhicules référencés Vr, et éventuellement directement par l'unité de production UP.

Elles peuvent être positionnées dans différents endroits d'une ville ou d'une agglomération, voire d'une zone géographique de plus grande étendue. Ainsi, une première station de distribution SD peut être située à proximité d'une unité de production UP et être directement approvisionnée par cette dernière. Les autres stations de distribution SD peuvent être localisées à différents endroits de la ville dans des zones d'accueil de véhicules susceptibles de s'alimenter en fluide d'intérêt dans ces stations de distribution SD. Elles peuvent ainsi être déplaçables, pour être ainsi disposées dans lesdites zones d'accueil, lesquelles peuvent être, par exemple, un parking pour voitures, vélos, une gare ferroviaire, ou encore un site portuaire. Les stations de distribution SD restent de préférence stationnaires lors des phases de transfert de fluide d'intérêt (remplissage ou approvisionnement). Les stations de distribution SD peuvent être distribuées sur un territoire de manière à permettre une utilisation partagée des stations SD par différents types de véhicules (bateaux, voitures, vélos etc...), selon une approche « *smart-grid ».*

Chaque station de distribution SD comporte au moins un réservoir Rs de station, destiné à fournir le fluide d'intérêt aux véhicules référencés Vr et aux véhicules non référencés V. Le ou les réservoirs Rs de station peuvent être adaptés à contenir le fluide d'intérêt en phase gazeuse ou en phase liquide. Dans cet exemple, le fluide d'intérêt est un gaz comprimé. Comme détaillé par la suite, les stations de distribution SD peuvent comporter un unique réservoir Rs_{d} de station destiné à distribuer directement du fluide d'intérêt aux véhicules V, Vr, voire peuvent comporter un premier réservoir Rsᵣ de station, dit de réserve, relié à un réservoir Rs_{d} de station, ce dernier ayant de préférence une plus faible contenance de fluide d'intérêt, et étant destiné à distribuer directement du fluide d'intérêt aux véhicules V, Vr. Chaque réservoir Rs de station présente alors une pression 'cible' Ps_{c}, c'est-à-dire une pression maximale autorisée pour laquelle le réservoir est considéré comme étant rempli. La pression cible Ps_{c} peut être identique ou différente pour chaque réservoir Rs de station.

Elle comporte en outre une jauge de contenance 22, connectée au réservoir Rs de station, et est adaptée à mesurer la quantité de fluide d'intérêt présent et à fournir en conséquence une valeur dite de contenance. Ainsi, la jauge de contenance 22 peut mesurer la quantité de fluide présent dans le volume du réservoir Rs_{d} dans le cas d'une station SD à réservoir unique, et/ou dans le volume du réservoir Rsᵣ dans le cas d'une station SD à au moins deux réservoirs, par exemple, à partir de la pression interne effective Ps_{eff} du gaz d'intérêt ou à partir du niveau de liquide d'intérêt. Dans le cas d'un gaz, la jauge de contenance indique que le réservoir est rempli lorsque la pression effective Ps_{eff} est sensiblement égale à la pression cible Pc correspondante, par exemple égale à 200 bars ou à 450 bars. Il est partiellement rempli lorsque la pression effective Ps_{eff} est inférieure à la pression cible Ps_{c} correspondante.

Elle comporte également un dispositif de communication 23, connecté à la jauge de contenance 22, et adapté à émettre, à l'attention du dispositif de gestion DG, un signal transmettant notamment la valeur de contenance Ps_{eff} mesurée par la jauge 22 ou tout autre grandeur équivalente, par exemple l'écart de la contenance effective Ps_{eff} par rapport à une valeur seuil prédéterminée. Ce signal peut être émis régulièrement ou après chaque modification de la valeur Ps_{eff} mesurée, entre autres. Ce signal peut également être un signal émis en réponse à la réception d'un signal d'interrogation provenant du dispositif de gestion DG. La communication entre les dispositifs de communication 23 des stations de distribution SD et le dispositif de communication 43 du dispositif de gestion DG peut être filaire ou sans-fil.

Comme l'illustre la fig.2, dans le cas d'une distribution d'un gaz d'intérêt, au moins une station de distribution SD, ou toutes les stations SD, peuvent comporter un ou plusieurs premiers réservoirs Rsᵣ, dit de réserve, dont une entrée peut être reliée à un premier compresseur 21.1. Il peut ainsi s'agir des bouteilles de gaz comprimé à 200 bars ayant été convoyées à partir de l'unité de production UP, ou d'un ou plusieurs réservoirs fixes éventuellement de plus grand volume. Les stations de distribution SD peuvent comporter un deuxième réservoir Rs_{d} intermédiaire, dit de distribution, dont une entrée est reliée ici au réservoir de réserve Rsᵣ par l'intermédiaire d'un deuxième compresseur 21.2. La pression cible de distribution Ps_{c,d} est de préférence supérieure à la pression cible de réserve Ps_{c,r}. Ainsi, l'hydrogène comprimé à 200 bars dans le réservoir de réserve Rsᵣ peut être transmis à la demande dans le réservoir de distribution Rs_{d} et porté à une pression cible de distribution Ps_{c,d}, par exemple égale à 450 bars, voire à 700 bars, cette pression étant supérieure à la pression cible de réserve Ps_{c,r}, ainsi qu'à la pression cible Pv_{c} des réservoirs des véhicules référencés Vr comme à celle des réservoirs des véhicules non référencés V. Le réservoir de réserve Rsᵣ présente avantageusement une plus grande contenance que le réservoir de distribution Rs_{d}. Un véhicule référencé Vr ou non référencé V peut ainsi être rempli en fluide d'intérêt rapidement à partir du réservoir de distribution Rs_{d} de haute pression, et le réservoir de distribution Rs_{d} peut être rempli plus lentement à partir du réservoir de réserve Rsᵣ via le compresseur 21.2. Comme mentionné plus loin, ce compresseur 21.1 peut permettre le remplissage du réservoir de réserve Rsᵣ à partir d'un approvisionnement à plus basse pression, notamment à partir d'une pression inférieure à la pression effective Ps_{eff,d} du réservoir de réserve Rs_{d}.

Les véhicules référencés Vr sont des véhicules référencés auprès du dispositif de gestion DG, et ils font partie du système de distribution 1 du fluide d'intérêt. Il s'agit de véhicules comportant un réservoir Rv de véhicule, une jauge de contenance 32, une pile à combustible FC fonctionnant à partir du fluide d'intérêt contenu dans le réservoir Rv de véhicule, et un dispositif de communication 33. Ils sont adaptés à approvisionner un réservoir Rs de station de distribution SD en fluide d'intérêt.

La pile à combustible FC est un générateur d'électricité à partir d'une réaction chimique par exemple du type H₂ + ½O₂ → H₂O. L'hydrogène carburant peut être directement le fluide d'intérêt ou être issu du fluide d'intérêt lorsque ce dernier est un vecteur énergétique de l'hydrogène tel que le méthanol, l'hydrazine, l'acide formique ou autre. L'électricité produite peut alimenter un moteur électrique présent dans le véhicule référencé Vr, par exemple un réfrigérateur, voire assurer la propulsion du véhicule. Le véhicule peut avoir deux, trois, ou quatre roues, et être une moto, une voiture, un camion, un train, un bateau ou autre.

Le réservoir Rv de véhicule contient le fluide d'intérêt et alimente la pile à combustible FC en fluide d'intérêt. Il comporte une entrée permettant le remplissage, partiel ou total, du réservoir Rv de véhicule à partir d'un réservoir Rs d'une station de distribution SD. Il comporte également une sortie permettant l'approvisionnement d'une station de distribution déficitaire SD_{d} en fluide d'intérêt à partir du réservoir Rv de véhicule. Les entrée et sortie peuvent être distinctes ou confondues. La jauge de contenance 32 est connectée au réservoir Rv, et est adaptée à mesurer la quantité de fluide d'intérêt dans le volume du réservoir Rv et à fournir une valeur dite de contenance, par exemple une valeur de pression effective Pv_{eff} dans le cas d'un gaz comprimé. Le réservoir Rv est dit rempli lorsque la pression effective Pv_{eff} est sensiblement égale à la pression cible Pv_{c}.

Le dispositif de communication 33 comporte un émetteur-récepteur, connecté à la jauge de contenance 32, et est adapté à émettre, à l'attention du dispositif de gestion DG, un signal transmettant notamment la valeur de contenance Pv_{eff} mesurée par la jauge 32, ou tout autre grandeur équivalente, par exemple l'écart de la contenance effective par rapport à une valeur seuil prédéterminée. Ce signal peut être émis régulièrement ou après chaque modification de la valeur Pv_{eff}, entre autres. Ce signal peut également être un signal émis en réponse à la réception d'un signal d'interrogation provenant du dispositif de gestion DG. La communication entre les dispositifs de communication 33 des véhicules référencés Vr et le dispositif de communication 43 du dispositif de gestion DG peut être filaire ou sans-fil.

Les véhicules référencés Vr peuvent appartenir à une ou plusieurs personnes dites gestionnaires, différents. Un gestionnaire peut être, par exemple, une société dans le cas d'une flotte de véhicules types camions poubelles, véhicules de distribution de courrier, véhicules de transport en commun routier, fluvial, ferroviaire, maritime ou tout autre véhicule professionnel. Il peut également être un particulier possédant un ou plusieurs véhicules référencés Vr.

Comme détaillé plus loin, le système de distribution 1 comporte des organes de remplissage 50 adaptés à permettre le remplissage, partiel ou total, des réservoirs Rv des véhicules référencés Vr à partir des stations de distribution SD, et des organes d'approvisionnement 60 adaptés à permettre l'approvisionnement des réservoirs Rs de station à partir des véhicules référencés Vr.

Ces organes de remplissage et les organes d'approvisionnement peuvent être des organes distincts 50, 60, ou être un même organe 70. Des exemples d'organes de remplissage et d'approvisionnement 50, 60, 70 sont décrits en détail plus loin. Ils peuvent être fixés aux stations de distribution SD et être raccordés fluidiquement aux véhicules référencés Vr. Ils peuvent en variante être fluidiquement raccordables, de manière amovible, aux stations de distribution SD ainsi qu'aux véhicules référencés Vr.

Ces organes de remplissage et d'approvisionnement 50, 60, 70 peuvent comporter chacun un tuyau de raccordement et au moins une vanne monodirectionnelle ou bidirectionnelle, éventuellement différentielle c'est-à-dire s'ouvrant lorsqu'une différence de pression supérieure ou égale à une valeur seuil est présente entre la pression amont et la pression aval. Le tuyau de raccordement peut comporter au moins une fiche de couplage permettant le couplage fluidique, de préférence étanche, entre le tuyau de raccordement et un réservoir auquel le tuyau est raccordé.

Le dispositif de gestion DG est adapté à assurer la gestion du système de distribution 1 du fluide d'intérêt, et notamment de veiller à ce que les stations de distribution SD identifiées comme étant déficitaires soient approvisionnées à partir de véhicules référencés Vr. Le dispositif de gestion DG comporte un dispositif électronique de traitement 40 et un dispositif de communication 43.

Le dispositif électronique de traitement 40 comporte un processeur 41 et au moins une mémoire 42. Ainsi, une première mémoire 42.1 peut comporter un programme d'ordinateur contenant des instructions de mise en œuvre d'un procédé de gestion, et une deuxième mémoire 42.2 peut contenir des répertoires ou des bases de données dans lesquels sont stockées des informations relatives à l'état des stations de distribution SD et des véhicules référencés Vr. Les mémoires 42.1 et 42.2 peuvent être une même mémoire. Le dispositif de communication 43 comporte un récepteur adapté à recevoir les signaux émis par les émetteurs 23 des stations de distribution SD et les émetteurs 33 des véhicules référencés Vr, et un émetteur adapté à envoyer au moins une requête d'approvisionnement à au moins un véhicule référencé identifié comme étant approvisionneur Vrₐ. Le dispositif de communication 43 est connecté au dispositif électronique de traitement 40, pour ainsi recevoir de ce dernier, le cas échéant, une instruction d'envoi d'un signal d'interrogation et/ou d'une requête d'approvisionnement, et pour transmettre à ce dernier le ou les signaux reçus.

Un répertoire B_{SD} associé aux stations de distribution SD, dit répertoire d'état de stations, peut ainsi comporter des informations transmises par les dispositifs de communication 23 de ces stations de distribution SD, par exemple les valeurs de contenance et l'instant de mesure. Chaque station de distribution SD peut transmettre une ou plusieurs valeurs de contenance selon qu'elle comporte un ou plusieurs réservoirs Rs de station, ou des valeurs d'une grandeur équivalente, par exemple un écart entre la contenance effective Ps_{eff} et une valeur seuil prédéterminée. Dans le cas d'un gaz d'intérêt, la valeur de contenance d'un réservoir Rs de station peut être la pression effective Ps_{eff}. D'autres informations peuvent également être mémorisées dans le répertoire, telles que des valeurs de contenance à des instants antérieurs issues de précédents relevés des jauges, et/ou des estimations de valeurs de contenance futures basées sur des prévisions d'échange de fluide d'intérêt. Le répertoire B_{SD} peut également comporter les informations de localisation de chaque station de distribution SD, ainsi que la valeur de pression cible Ps_{c} de chaque réservoir Rs de station de distribution. Dans le cas où une station de distribution SD comporte un réservoir de réserve Rsᵣ de grande contenance et un réservoir de distribution Rs_{d} de plus faible contenance, le répertoire B_{SD} comporte de préférence une valeur de contenance Ps_{eff,r} du réservoir de réserve Rsᵣ ou une valeur d'une grandeur équivalente.

Un répertoire Bvᵣ associé aux véhicules référencés Vr, dit répertoire d'état de véhicules, peut comporter des informations transmises par les dispositifs de communication de ces véhicules référencés Vr, par exemple les valeurs de contenance effective Pv_{eff} ou des valeurs d'une grandeur équivalente (par ex. écart entre la contenance effective mesurée et une valeur seuil prédéterminée), et l'instant de mesure. Dans le cas d'un gaz d'intérêt, la valeur de contenance peut être la pression effective Pv_{eff}, ie la pression mesurée par la jauge 32. D'autres informations peuvent également être mémorisées, telles que les trajets futurs prévus déclarés par chaque véhicule référencé Vr, ainsi que les dates de ces trajets futurs. Les trajets futurs répertoriés sont de préférence des trajets correspondant à une faible consommation du fluide d'intérêt par la pile à combustible FC, de sorte que le véhicule référencé Vr peut alors participer à la redistribution dans l'une ou l'autre des stations de distribution SD d'une partie de son fluide d'intérêt présent dans le réservoir Rv de véhicule. Le répertoire Bvᵣ peut également comporter d'autres informations, par exemple la valeur de pression cible Pv_{c} de chaque réservoir Rv, ainsi que, éventuellement, la position des véhicules référencés Vr.

Le procédé de gestion, mise en œuvre par le dispositif de gestion DG, comporte au moins les étapes suivantes. Ces étapes peuvent être réitérées périodiquement, par exemple une à plusieurs fois par jour. Ces étapes ne sont pas nécessairement réalisées dans un ordre précis. Elles peuvent être réalisées sur déclenchement d'un évènement (par exemple transmission d'une information de contenance après une mesure de jauge, ou encore transmission d'un trajet futur planifié par un véhicule référencé Vr).

Lors d'une première étape, pour chaque station de distribution SD, une mesure de contenance Ps_{eff} du réservoir Rs de station est effectuée par la jauge 22 correspondante. Il s'agit de la quantité effective de fluide d'intérêt restant dans le réservoir Rs de station, à l'instant courant. Cette mesure peut être effectuée régulièrement ou lorsqu'une variation de la contenance du réservoir Rs est détectée. Elle peut également être effectuée en réponse à une requête d'interrogation émise par le dispositif de gestion DG. Chaque station de distribution SD peut ensuite transmettre au dispositif de gestion DG la valeur de contenance mesurée, par exemple la pression effective Ps_{eff} du fluide d'intérêt dans le réservoir Rs, ou une valeur d'une première grandeur équivalente, par exemple un écart entre la pression effective Ps_{eff} et une valeur seuil prédéterminée Ss_{inf}. Le dispositif de gestion DG actualise ensuite le répertoire d'état de distribution B_{SD}.

Une première grandeur représentative de la contenance du réservoir Rs de station est ensuite déterminée à partir d'au moins la mesure de contenance Ps_{eff} mesurée. Il peut s'agir de la contenance effective Ps_{eff} elle-même à l'instant courant, d'une estimation Psf de la contenance à un instant ultérieur calculée à partir de valeurs de contenance mesurées à différents instants passés, voire un écart entre la contenance effective Ps_{eff} ou la contenance ultérieure Psf et un premier seuil prédéterminé Ss_{inf}, ou toute autre grandeur équivalente. L'estimation de la contenance Psf à un instant ultérieur permet d'évaluer le risque de déficit futur en fluide d'intérêt de la station de distribution SD concernée. Cette estimation est calculée par apprentissage à partir de l'évolution passée de la contenance effective Ps_{eff} en fluide d'intérêt selon la période de l'année, du mois ou du jour considéré, qui dépend de la demande des véhicules (référencés Vr et non référencés V). D'autres grandeurs équivalentes peuvent être utilisées, comme le taux de variation dPs_{eff}/dt de la contenance effective. Ainsi, à titre d'exemple, une baisse importante de la contenance effective Ps_{eff} par jour peut également permettre d'estimer le déficit futur de la station de distribution SD concernée. La détermination de la première grandeur représentative est de préférence effectuée par le dispositif de gestion DG.

Lors d'une deuxième étape, au moins une station de distribution dite déficitaire SD_{d} est identifiée par comparaison entre au moins les valeurs de la première grandeur représentative Ps_{eff}, Psf et au moins un premier seuil inférieur prédéterminé Ss_{inf}. Cette étape d'identification peut être effectuée par le dispositif de gestion DG à partir du répertoire d'état de distribution B_{SD} actualisé. Une station de distribution SD est dite déficitaire lorsque la valeur de la première grandeur représentative, par exemple la contenance effective Ps_{eff} à l'instant courant ou la contenance estimée Ps_{f} à un instant ultérieur, est inférieure ou égale au premier seuil inférieur Ss_{inf}, par exemple lorsqu'elle devient inférieure ou égale à 50% de sa pression cible Ps_{c}. Un ou plusieurs seuils inférieurs Ss_{inf} peuvent être prédéterminés, par exemple une première valeur Ss_{inf,1} égale à 50% de la pression cible Ps_{c}, et une deuxième valeur Ss_{inf,2} en deçà de laquelle la station de distribution est identifiée comme devant être approvisionnée en fluide d'intérêt de façon prioritaire.

De manière similaire, au moins une station de distribution dite excédentaire SDₑ, ou capacitaire, peut être identifiée par comparaison entre au moins les valeurs de la première grandeur représentative Ps_{eff}, Ps_{f} et au moins un premier seuil supérieur prédéterminé Ssₛᵤₚ. Cette étape d'identification peut être effectuée par le dispositif de gestion DG à partir du répertoire d'état de distribution B_{SD} actualisé. Ainsi, une station de distribution SD est dite excédentaire lorsque la valeur de la première grandeur représentative, par exemple la contenance effective Ps_{eff} à l'instant courant ou la contenance estimée Ps_{f} à un instant ultérieur, est supérieure ou égale au premier seuil supérieur Ssₛᵤₚ, par exemple lorsqu'elle devient supérieure ou égale à 90% de sa pression cible Ps_{c}. Les premiers seuils inférieur Ss_{inf} et supérieur Ssₛᵤₚ peuvent être identiques ou différents.

Ainsi, le dispositif de gestion DG détermine le besoin éventuel d'approvisionnement, actuel ou futur, des stations de distribution SD. Une station de distribution déficitaire SD_{d} peut être une station de distribution SD, alimentée par l'unité de production UP, dont le taux de fourniture du fluide d'intérêt aux véhicules (référencés Vr et non référencés V) est supérieur au taux d'approvisionnement par l'unité de production UP. Une telle station SD_{d} sera identifiée comme pouvant devenir déficitaire et il sera alors prévu qu'elle soit approvisionnée régulièrement par des véhicules référencés Vr.

Lors d'une troisième étape, qui peut être effectuée simultanément à la première étape, pour chaque véhicule référencé Vr, une mesure de la contenance du réservoir Rv de véhicule est effectuée par la jauge 32 correspondante. Il s'agit de la quantité effective de fluide d'intérêt restant dans le réservoir Rv de véhicule, à l'instant courant. Cette mesure peut être effectuée régulièrement, ou lorsqu'une variation de la contenance du réservoir Rv est détectée. Elle peut également être effectuée en réponse à une requête d'interrogation émise par le dispositif de gestion DG. Chaque véhicule référence Vr peut ensuite transmettre au dispositif de gestion DG la valeur de contenance mesurée, par exemple la contenance effective Pv_{eff} du fluide d'intérêt dans le réservoir Rv, ou une valeur d'une grandeur équivalente, par exemple un écart entre la contenance effective Pv_{eff} et une valeur seuil prédéterminée Svₛᵤₚ. Le dispositif de gestion DG actualise ensuite le répertoire d'état de véhicule B_{Vr}. Ce dernier peut également recevoir les informations relatives aux futurs trajets prévus et les dates de trajets.

Une deuxième grandeur représentative de la contenance du réservoir Rv de véhicule est ensuite déterminée à partir d'au moins la mesure de contenance Pv_{eff} mesurée. Il peut s'agir de la contenance effective Pv_{eff} elle-même à l'instant courant, d'une estimation Pv_{f} de la contenance à un instant ultérieur calculée à partir de valeurs de contenance mesurées à différents instants passés, voire un écart entre la contenance effective Pv_{eff} ou la contenance ultérieure Pv_{f} et un deuxième seuil prédéterminé Svₛᵤₚ, ou toute autre grandeur équivalente. L'estimation de la contenance Pv_{f} à un instant ultérieur permet d'évaluer la capacité future d'approvisionnement en fluide d'intérêt du véhicule référencé Vr concerné. Cette estimation est calculée par apprentissage à partir de l'évolution passée de la contenance effective Pv_{eff} en fluide d'intérêt selon la période de l'année, du mois ou du jour considéré, qui dépend de l'habitude de remplissage et de consommation en fluide d'intérêt du véhicule référencé Vr. La détermination de la deuxième grandeur représentative est de préférence effectuée par le dispositif de gestion DG.

Lors d'une quatrième étape, au moins un véhicule référencé dit approvisionneur Vrₐ est identifié par comparaison entre au moins les valeurs de la deuxième grandeur représentative Pv_{eff}, Pv_{f} et au moins le deuxième seuil supérieur prédéterminé Svₛᵤₚ. Cette étape d'identification peut être effectuée par le dispositif de gestion DG à partir du répertoire d'état de véhicule Bvᵣ actualisé. Un véhicule référence Vr est dit approvisionneur lorsque la valeur de la deuxième grandeur représentative, par exemple la contenance effective Pv_{eff} à l'instant courant ou la contenance estimée Pv_{f} à un instant ultérieur, est supérieure ou égale à la valeur seuil Svₛᵤₚ, par exemple lorsqu'elle devient supérieure ou égale à 80% de la pression cible Pv_{c}, et de préférence supérieure ou égale à 90% de Pv_{c}. D'autres critères d'identification peuvent être pris en compte par le dispositif de gestion DG, par exemple, la distance minimale de la station de distribution déficitaire SD_{d} vis-à-vis du véhicule référence Vr lors du trajet futur prévu, et/ou la date du trajet futur prévu. Ainsi, un véhicule référencé Vr peut être identifié comme étant approvisionneur à l'instant courant ou à un instant ultérieur sans que les trajets habituels de ce dernier soient sensiblement modifiés.

Le dispositif de gestion peut comporter un critère d'identification supplémentaire, selon lequel un véhicule référencé approvisionneur Vrₐ est un véhicule référencé Vr qui permet de limiter les pertes énergétiques associées à l'approvisionnement du réservoir Rs_{d} de station à partir du réservoir Rv de véhicule dans le cas d'un approvisionnement direct, c'est-à-dire sans passer par le réservoir de réserve Rsᵣ le cas échéant. Dans un tel cas, le fluide d'intérêt subit un travail de compression en passant du réservoir Rv de véhicule au réservoir de distribution Rs_{d} via le compresseur 21.2, et ne subit pas de détente pour approvisionner la station SD.

Pour cela, lors de la quatrième étape, le dispositif de gestion DG effectue un calcul d'une différence de pression ΔP_{d/v} entre la pression cible Ps_{c,d} du réservoir de distribution Rs_{d} (par exemple 450 bars) et la pression effective Pv_{eff} du réservoir Rv de véhicule. Le véhicule référencé approvisionneur Vrₐ peut être ainsi le véhicule référencé Vr qui présente la différence de pression ΔP_{d/v} minimale, voire qui minimise un ensemble de critères, dont la différence de pression ΔP_{d/v}, la distance minimale de la station déficitaire SD_{d} lors d'un trajet futur prévu et/ou la date du trajet futur.

A titre d'exemple, il est possible d'estimer les pertes énergétiques associées au travail de compression effectué lors de l'approvisionnement direct du réservoir de distribution Rs_{d} de la station SD (de pression cible Ps_{c,d}) à partir du réservoir Rv de véhicule (de pression effective Pv_{eff}), via le compresseur 21.2. En première approximation, les pertes peuvent être exprimées par la relation RT.ln(Ps_{c,d/}Pv_{eff}) où T est la température du fluide d'intérêt (ici 300K) et R est la constante des gaz parfaits. Dans le cas d'une pression effective Pv_{eff} du réservoir Rv de véhicule égale à 250 bars et d'une pression cible Ps_{c,d} du réservoir Rs_{d} de station égale à 450 bars, les pertes énergétiques sont égales à 730 kJ/kg environ. Cependant, lorsque la pression effective Pv_{eff} est égale à 350 bars, les pertes énergétiques sont égales à 310 kJ/kg environ, soit une diminution de l'ordre de 57%. Aussi, il est avantageux que le critère d'identification du véhicule référencé approvisionneur Vrₐ comporte en outre une minimisation de la différence de pression ΔP_{d/v}.

En outre, dans le cas où la station de distribution déficitaire SD_{d} comporte un premier réservoir de réserve Rsᵣ (pression cible Ps_{c,r}) relié à un deuxième réservoir de distribution Rs_{d} (pression cible Ps_{c,d}) par un compresseur 21.2, pour lequel Ps_{c,r} (par ex. 200 bars) est inférieure à Ps_{c,d} (par ex. 450 bars), il est avantageux que l'approvisionnement du réservoir de distribution Rs_{d} se fasse directement via le compresseur 21.2, et non pas indirectement via le réservoir de réserve Rsᵣ, ceci afin de limiter les pertes énergétiques liées à des phases de détente entre le réservoir Rv de véhicule et le réservoir de réserve Rsᵣ puis de re-compression entre le réservoir de réserve Rsᵣ et le réservoir de distribution Rs_{d}.

En effet, à titre d'exemple, dans le cas où l'approvisionnement du réservoir de distribution Rs_{d} est effectué de manière indirecte (c'est-à-dire via le réservoir de réserve Rsᵣ), le réservoir Rv de véhicule de pression effective Pv_{eff} égale à 350 bars assure l'approvisionnement du réservoir de réserve Rsᵣ par détente (le compresseur 21.1 n'est pas ici nécessaire) jusqu'à ce que la pression effective Ps_{eff,r} de ce dernier atteigne la valeur cible Ps_{c,r} de 200 bars. L'approvisionnement du réservoir de distribution Rs_{d} est ensuite effectué par transfert et compression du fluide d'intérêt à partir du réservoir de réserve Rsᵣ via le compresseur 21.2 jusqu'à ce que la pression effective Ps_{eff,d} dans le réservoir de distribution Rs_{d} atteigne la valeur cible Ps_{c,r} par exemple de 450 bars. Dans ce cas, le travail de compression est égal à 1000 kJ/kg environ, soit une augmentation de près de 220% par rapport aux 310 kJ/kg mentionnés précédemment.

Aussi, lorsqu'un approvisionnement de la station de distribution déficitaire SD_{d} est prévu de manière indirecte, le véhicule référencé approvisionneur Vrₐ est avantageusement identifié à partir d'un critère de minimisation d'une différence de pression ΔP_{r/v} définie comme étant la différence entre la pression cible Ps_{c,r} du réservoir de réserve Rsᵣ de la station de distribution déficitaire SD_{d} et la pression effective Pv_{eff} de chaque véhicule référencé Vr. Comme précédemment, le véhicule référencé approvisionneur Vrₐ peut être ainsi le véhicule référencé Vr qui présente la différence de pression ΔP_{r/v} minimale, voire qui minimise un ensemble de critères, dont la différence de pression ΔP_{r/v}, la distance minimale de la station déficitaire SD_{d} lors d'un trajet futur prévu et/ou la date du trajet futur. Toutefois, l'approvisionnement direct, c'est-à-dire directement entre le réservoir Rv de véhicule et le réservoir RS_{d} de distribution, sans passer au préalable par le réservoir Rsᵣ de réserve, reste privilégié.

Lors d'une cinquième étape, le dispositif de gestion DG envoie au véhicule référencé, identifié comme étant approvisionneur Vrₐ, une requête d'approvisionnement de la station de distribution identifiée comme étant déficitaire SD_{d}. La requête peut être envoyée au gestionnaire du véhicule référencé approvisionneur Vrₐ, en lui spécifiant le besoin d'approvisionnement de la station de distribution déficitaire SD_{d}. Cette requête peut inclure d'autres informations complémentaires, telles qu'une quantité de fluide d'intérêt à fournir ou une date d'approvisionnement souhaitée. La requête peut être transmise par une voie de communication filaire ou sans-fil.

Cette requête peut également comporter une information liée aux stations de distribution excédentaires SDₑ, auxquelles un véhicule référencé Vr peut venir au préalable remplir son réservoir Rv de véhicule, devenir ainsi un véhicule référencé approvisionneur Vrₐ, pour ensuite approvisionner la station de distribution déficitaire SD_{d}. Dans un tel cas, le véhicule référencé approvisionneur Vrₐ peut être sélectionné par le fait que, lors de son trajet futur prévu, il passe à proximité d'une station de distribution excédentaire SDₑ pour en recevoir du fluide d'intérêt, puis à proximité d'une station de distribution déficitaire SDₑ pour l'approvisionner en fluide d'intérêt. Ainsi, le véhicule référencé Vr, qui prévoit de remplir son réservoir Rv auprès de la station de distribution excédentaire SDₑ, peut devenir ensuite un véhicule approvisionneur Va (s'il est d'accord), dans la mesure où sa valeur de contenance future Pv_{f} sera supérieure à la valeur seuil prédéterminée Svₛᵤₚ, et donc peut approvisionner en fluide d'intérêt la station de distribution déficitaire SD_{d}.

Le dispositif de gestion DG reçoit ensuite la réponse du gestionnaire du véhicule référencé Vr identifié comme étant approvisionneur. Lorsque la réponse est positive, le dispositif de gestion DG peut actualiser le répertoire d'état de stations B_{SD} par l'ajout d'une information d'approvisionnement prévu. Le véhicule référencé approvisionneur Vrₐ, lors du trajet et à la date prévue, rejoint la station de distribution déficitaire SD_{d} et approvisionne cette dernière en fluide d'intérêt à partir de son réservoir Rv. Le répertoire d'état de stations B_{SD} pourra ensuite être actualisé, lors d'un prochain envoi du signal d'interrogation. La station de distribution SD initialement déficitaire pourra alors, en fonction de sa valeur de contenance, ne plus être identifiée comme déficitaire, voire pourra être identifiée comme excédentaire.

Ainsi, par un tel procédé de gestion, le système de distribution 1 du fluide d'intérêt permet de limiter les pertes énergétiques et/ou les émissions de CO2 liées à l'approvisionnement régulier des stations de distribution SD, par exemple par des camions-citernes. En effet, l'approvisionnement des stations de distribution déficitaires SD_{d} est ici effectué également voire exclusivement par des véhicules référencés Vr. Ces véhicules référencés Vr sont donc tour à tour des véhicules 'clients' qui remplissent leur réservoir dans les stations de distribution SD et des véhicules 'approvisionneurs' qui approvisionnent les stations de distribution SD en fluide d'intérêt. Une meilleure gestion fluidique est ainsi réalisée, ce qui permet de limiter le recours à des moyens dédiés d'approvisionnement, par exemple des camions-citernes, entre l'unité de production UP et les stations de distribution SD. Cette limitation à des moyens dédiés permet naturellement de réduire les pertes énergétiques associées au transport du fluide d'intérêt entre l'unité de production UP et les stations de distribution SD.

De plus, le procédé de gestion permet avantageusement de limiter les pertes énergétiques associées à l'approvisionnement du réservoir de distribution Rs_{d} de la station de distribution déficitaire SD_{d} en privilégiant un approvisionnement direct (ie. sans passer par le réservoir de réserve Rsᵣ) et en identifiant le véhicule référencé approvisionneur Vrₐ approprié. Dans le cas également d'un approvisionnement indirect (ie. via le réservoir de réserve Rsᵣ), le procédé de gestion permet de limiter les pertes énergétiques en identifiant le véhicule référencé approvisionneur Vrₐ approprié. Pour cela, le critère d'identification du véhicule référencé approvisionneur Vrₐ comporte une phase de calcul d'une différence de pression entre la pression effective Pv_{eff} du réservoir Rv de véhicule d'une part, et la pression cible Ps_{c,r} du réservoir de réserve Rsᵣ ou la pression cible Ps_{c,d} du réservoir de distribution Rs_{d} d'autre part.

Le procédé de gestion se distingue ainsi de celui décrit dans le document GB2385582 en ce que les véhicules Vr sont référencés auprès d'un dispositif de gestion, et sont adaptés à approvisionner les stations de distribution SD en fluide d'intérêt. Dans le document GB2385582 au contraire, le dispositif de gestion analyse l'évolution de la demande de remplissage des réservoirs de véhicule (les véhicules étant équipés d'un émetteur transmettant la contenance effective des réservoirs), et prévoit ensuite un plan d'approvisionnement des stations de distribution à partir d'une unité de production. Les véhicules ne sont donc pas adaptés à participer à l'approvisionnement des stations de distribution. Le procédé de gestion du document GB2385582 peut néanmoins être couplé à celui de l'invention.

A la différence de l'art antérieur, outre le fait que le système de distribution 1 comporte des organes de remplissage 50 adaptés à permettre le remplissage des réservoirs des véhicules référencés Vr à partir des stations de distribution SD, il comporte également des organes d'approvisionnement 60 adaptés à permettre l'approvisionnement des réservoirs Rs de station à partir des véhicules référencés Vr.

En effet, à ce jour, les stations de distribution SD sont habituellement adaptées à fournir du fluide d'intérêt à un véhicule référencé Vr en utilisant un tuyau souple de raccordement terminé par une fiche de couplage fluidique, du type 'pistolet', le tout répondant souvent à une norme définie pour chaque type fluide. De plus, l'approvisionnement de la station de distribution SD par un camion-citerne peut être réalisé par un organe d'échange spécifique qui répond généralement à une norme différente que celle prévue pour les véhicules référencés Vr. Les normes définies pour chaque type de transfert fluidique tiennent compte notamment des pressions, débits de fluide échangé ainsi que des risques spécifiques de chaque fluide. Quant aux véhicules référencés Vr, ils sont généralement équipés uniquement d'un organe de réception de fluide permettant un transfert d'une station de distribution SD vers le réservoir Rv de véhicule. Au contraire, dans le système de distribution selon le mode de réalisation, les stations de distribution SD et les véhicules référencés Vr du système de distribution 1 sont adaptés ici pour, en outre, approvisionner les stations de distribution SD en fluide d'intérêt à partir du réservoir Rv de véhicule. La composition chimique du fluide et sa phase liquide ou gazeuse peuvent conditionner le transfert fluidique du véhicule référencé Vr vers la station de distribution SD.

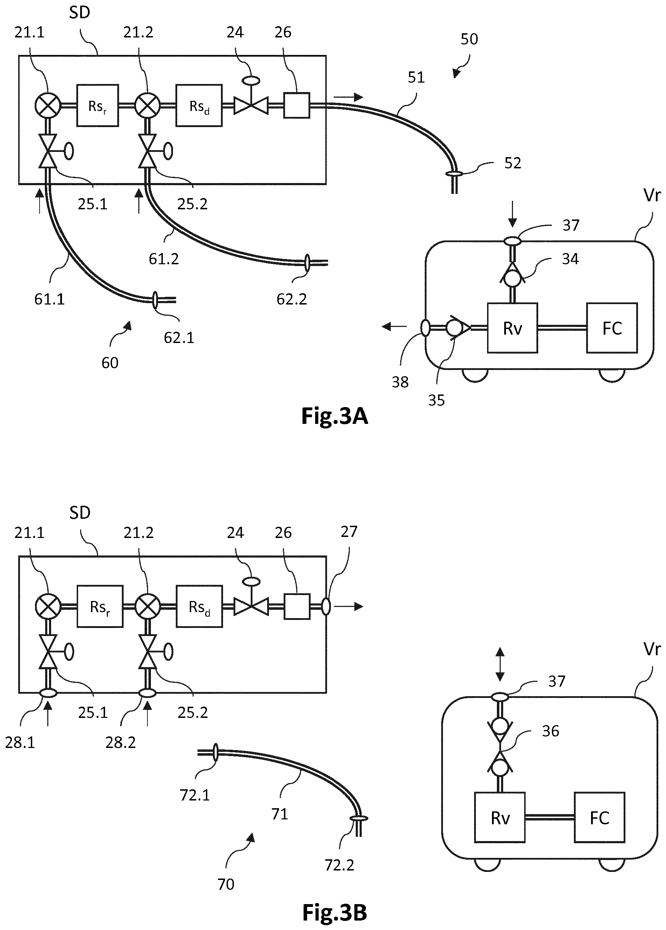

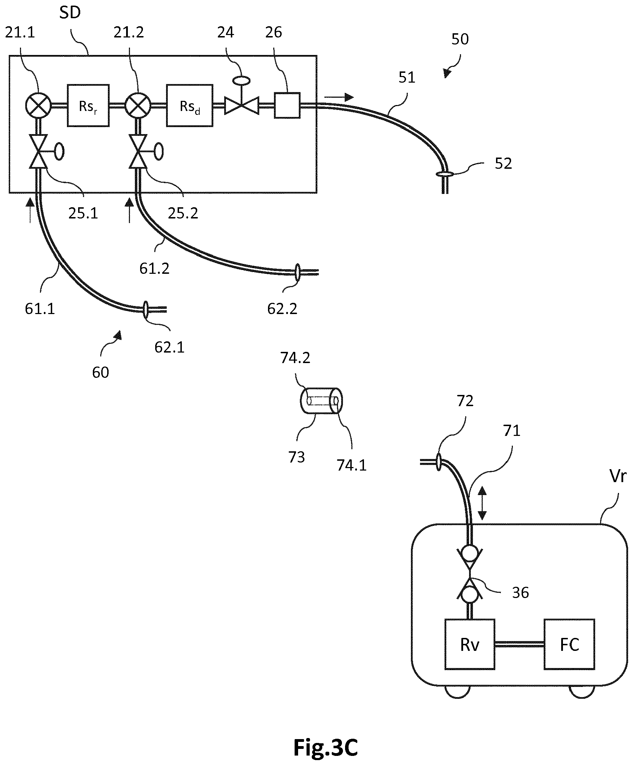

Les figures 3A, 3B et 3C sont des vues schématiques et partielles de différentes variantes d'une station de distribution SD et d'un véhicule référencé Vr munis d'un organe de remplissage 50 et d'un organe d'approvisionnement 60, ces organes étant distincts sur les fig.3A et 3C et confondus sur la fig.3B. Tous les éléments décrits précédemment d'une station de distribution SD et d'un véhicule référencé Vr, tels que les jauges de contenance et les dispositifs de communication, ne sont pas illustrés à nouveau.

En référence à la fig.3A, la station de distribution SD comporte ici un réservoir de réserve Rsᵣ dont une entrée est reliée à un compresseur 21.1, et un réservoir de distribution Rs_{d} relié à une sortie du réservoir de réserve Rsᵣ par un compresseur 21.2 permettant d'approvisionner le réservoir Rs_{d} en fluide d'intérêt en le comprimant à la pression cible Ps_{c,d}. Le réservoir de distribution Rs_{d} comporte une sortie reliée ici une vanne commandable 24 puis à un dispositif de gestion thermique 26. La vanne commandable 24 permet de permettre ou non l'écoulement du fluide d'intérêt en sortie du réservoir de distribution Rs_{d}, voire également d'en contrôler le débit, et le dispositif de gestion thermique 26 permet de contrôler la température du fluide d'intérêt pour éviter la surchauffe du fluide d'intérêt lors du remplissage du réservoir Rv de véhicule. Des vannes commandables 25.1 et 25.2 sont reliées respectivement aux compresseurs 21.1 et 21.2, et positionnées respectivement sur une ligne fluidique d'approvisionnement indirect (pour la vanne 25.1) et sur une ligne fluidique d'approvisionnement direct (pour la vanne 25.2).

Un organe de remplissage 50 est relié à la sortie du réservoir de distribution Rs_{d}, et plus précisément est ici fixé au dispositif de gestion thermique 26. Il comporte un tuyau souple 51 dont une extrémité distale comporte une fiche de couplage 52 destinée à être couplée fluidiquement, de préférence de manière étanche, avec une prise de couplage 37 d'un véhicule référencé Vr. L'organe de remplissage 50 peut comporter un dispositif de détachement (non représenté) permettant une coupure du tuyau 51 à un emplacement prédéfini et une fermeture de la vanne commandable 24 en cas de départ inopiné du véhicule référencé Vr.

Un organe d'approvisionnement 60 comporte un premier tuyau souple 61.1 relié à l'entrée du réservoir de réserve Rsᵣ par l'intermédiaire de la vanne commandable 25.1 et du compresseur 21.1 (approvisionnement indirect). Une extrémité libre du tuyau 61.1 comporte une fiche de couplage 62.1 destinée à être couplée fluidiquement, de préférence de manière étanche, à une prise de couplage 38 du véhicule référencé Vr. L'organe d'approvisionnement 60 comporte un deuxième tuyau souple 61.2 relié à l'entrée du réservoir de distribution Rs_{d} par l'intermédiaire de la vanne commandable 25.2 et du compresseur 21.2 (approvisionnement direct). Une extrémité libre du tuyau 61.2 comporte une fiche de couplage 62.2 destinée à être couplée fluidiquement, de préférence de manière étanche, à la prise de couplage 38 du véhicule référencé Vr. L'organe d'approvisionnement 60 peut comporter également un dispositif de détachement (non représenté). Un dispositif de gestion thermique (non représenté) peut également être disposé en amont de l'entrée des réservoirs Rsᵣ et Rs_{d}.

Le véhicule référencé Vr comporte ici un réservoir Rv de véhicule alimentant une pile à combustible FC. Il peut également être relié à une soupape (non représentée) de type PRD (pour *Pressure Relief Device*, en anglais) permettant l'échappement du fluide d'intérêt hors du réservoir Rv de véhicule en cas de surpression anormale, notamment si le fluide d'intérêt est stocké liquide dans Rv.

Le réservoir Rv de véhicule comporte une entrée reliée à une prise de couplage 37, destinée à recevoir la fiche de couplage 52 de l'organe de remplissage 50, par l'intermédiaire d'une vanne d'isolation 34 (*Container isolation valve,* en anglais), ou d'un clapet antiretour. La vanne d'isolation 34 est ici monodirectionnelle et permet l'écoulement du fluide d'intérêt uniquement dans le sens de la prise de couplage 37 vers l'entrée du réservoir Rv de véhicule.

Il comporte une sortie reliée à une prise de couplage 38 destinée à recevoir la fiche de couplage 62.1 ou 62.2 de l'organe d'approvisionnement 60 par l'intermédiaire d'une vanne d'isolation 35 ou d'un clapet antiretour. La vanne d'isolation 35 est également monodirectionnelle et permet l'écoulement du fluide d'intérêt uniquement dans le sens de la sortie du réservoir Rv vers la prise de couplage 38.

Les vannes d'isolation 34 et 35 peuvent être différentielles, en particulier la vanne d'isolation 34 de la ligne fluidique de remplissage, et laisser ainsi passer le fluide d'intérêt lorsque la pression aval est inférieure à la pression amont, à une constante près. Ainsi, lorsque la fiche de couplage 52 de l'organe de remplissage 50 est couplée à la prise de couplage 37 du véhicule référencé Vr, et la vanne commandable 24 ouverte, le fluide d'intérêt peut s'écouler du réservoir de distribution Rs_{d}, par exemple à 450 bars, jusque dans le réservoir Rv de véhicule pour le remplir, par exemple, à 350 bars. Dans le cas d'un approvisionnement, lorsque la prise de couplage 62.1 ou 62.2 de l'organe d'approvisionnement 60 est couplée à la fiche de couplage 38 du véhicule référencé Vr, et la vanne commandable 25.1 ou 25.2 ouverte, le compresseur 21.1 ou 21.2 peut provoquer l'écoulement du fluide d'intérêt du réservoir Rv de véhicule dont la pression est inférieure ou égale à, par exemple, 350 bars, jusqu'au réservoir de réserve Rsᵣ pour le remplir à 200 bars, ou jusqu'au réservoir de distribution Rs_{d} pour le remplir, par exemple, à 450 bars.

En variante, il est possible que l'organe de remplissage 50 et/ou l'organe d'approvisionnement 60 appartiennent au véhicule référencé Vr et non pas sur la station de distribution SD. De plus, le véhicule référencé Vr peut également comporter une ou plusieurs vannes commandables. Les vannes commandables 25.1 et 25.2 peuvent faire partie des organes de remplissage 50 et d'approvisionnement 60. Le ou les dispositifs de gestion thermique peuvent être positionnés au niveau de la station de distribution SD ou du véhicule référencé Vr. Par ailleurs, la station de distribution SD et le véhicule référencé Vr peuvent comporter tout élément fluidique supplémentaire permettant d'améliorer le contrôle de l'écoulement du fluide d'intérêt. Par ailleurs, les tuyaux 51, 61.1 et 61.2 des organes de remplissage 50 et d'approvisionnement 60 peuvent être assemblés de manière amovible.

En référence à la fig.3B, la station de distribution SD est similaire à celle illustrée sur la fig.3A et en diffère essentiellement en ce que les organes de remplissage et d'approvisionnement 70 sont confondus et peuvent être assemblés à la station de distribution SD de manière amovible. Cette dernière comporte alors une prise de couplage 27 disposée sur la ligne fluidique de remplissage et destinée à recevoir une fiche de couplage 72.1 d'un organe de remplissage/approvisionnement 70, et comporte des deuxièmes prises de couplage 28.1 et 28.2 disposées respectivement sur les lignes fluidiques d'approvisionnement indirect et direct et destinées à recevoir la même fiche de couplage 72.1 de l'organe de remplissage/approvisionnement 70.

L'organe de remplissage/approvisionnement 70 est adapté à permettre tant le remplissage d'un réservoir Rv de véhicule à partir du réservoir de distribution Rs_{d}, que l'approvisionnement du réservoir de distribution Rs_{d} à partir d'un réservoir Rv de véhicule (indirectement via la prise de couplage 28.1, ou directement via la prise de couplage 28.2). Il comporte ici un tuyau souple 71 dont les deux extrémités libres opposées comprennent chacune une fiche de couplage 72.1, 72.2. Une première fiche de couplage 72.1 est destinée à être couplée, de préférence de manière étanche, à l'une ou l'autre des prises de couplage 27, 28.1, 28.2 de la station de distribution SD. La deuxième fiche de couplage 72.2 est destinée à être couplée, de préférence de manière étanche, à la prise de couplage 37 du véhicule référencé Vr.

Le véhicule référencé Vr comporte un réservoir Rv de véhicule ayant une entrée/sortie reliée à une prise de couplage 37 par l'intermédiaire ici d'une vanne bidirectionnelle différentielle 36.

Ainsi, le remplissage du réservoir Rv de véhicule à partir du réservoir de distribution Rs_{d} est alors possible par couplage de la première fiche de couplage 72.1 de l'organe de remplissage/approvisionnement 70 dans la prise de couplage 27 de remplissage de la station de distribution SD d'une part, et par couplage de la deuxième fiche de couplage 72.2 dans la prise de couplage 37 du véhicule référencé Vr d'autre part. L'approvisionnement du réservoir de distribution Rs_{d} à partir du réservoir Rv de véhicule est possible de manière indirecte par couplage de la première fiche de couplage 72.1 de l'organe de remplissage/approvisionnement 70 dans la prise de couplage 28.1 de la ligne fluidique d'approvisionnement indirect de la station de distribution SD d'une part, et par couplage de la deuxième fiche de couplage 72.2 dans la prise de couplage 37 du véhicule référencé Vr d'autre part. L'approvisionnement du réservoir de distribution Rs_{d} à partir du réservoir Rv de véhicule est possible de manière directe par couplage de la première fiche de couplage 72.1 de l'organe de remplissage/approvisionnement 70 dans la prise de couplage 28.2 de la ligne fluidique d'approvisionnement direct de la station de distribution SD d'une part, et par couplage de la deuxième fiche de couplage 72.2 dans la prise de couplage 37 du véhicule référencé Vr d'autre part.

En référence à la fig.3C, la station de distribution est similaire à celle de la fig.3A et le véhicule référencé Vr est similaire à celui de la fig.3B. Ils en diffèrent essentiellement en ce que l'organe de remplissage 50 et d'approvisionnement 60 comporte en outre une pièce de jonction fluidique 73. Le véhicule référencé Vr comporte un tuyau souple 71 relié à une entrée/sortie du réservoir Rv de véhicule par l'intermédiaire de la vanne bidirectionnelle 36. Le tuyau souple 71 comporte en son extrémité libre une fiche de couplage 72.

La pièce de jonction 73 comporte deux fiches de couplage 74.1 et 74.2 reliées entre elles de manière étanche par un conduit interne à la pièce. Ainsi, par insertion de la fiche de couplage 52 dans la prise 74.2, et par l'insertion de la fiche de couplage 72 dans la prise 74.1, un couplage fluidique est réalisé et il est possible de procéder au transfert du fluide d'intérêt du réservoir de distribution Rs_{d} au réservoir Rv de véhicule, comme décrit en détail précédemment. De manière similaire, par insertion de la fiche de couplage 62.1 ou 62.2 dans la prise 74.2, et par insertion de la fiche de couplage 72 dans la prise 74.1, un couplage fluidique est réalisé et il est possible de procéder au transfert du fluide d'intérêt du réservoir Rv de véhicule dans la station de distribution SD, ici via le compresseur, comme décrit en détail précédemment.

D'une manière générale, en variante des exemples illustrés sur les fig.3A à 3C, lorsque la station de distribution SD comporte un réservoir de réserve Rsᵣ dont la pression cible Pr_{c}, par exemple égale à 200 bars, est comprise entre la pression cible de distribution Pr_{d}, par exemple 450 bars, et la pression cible Pv_{c} du réservoir Rᵥ, par exemple 350 bars, l'approvisionnement de la station de distribution SD par un véhicule référencé Vr peut être effectué par transfert du fluide d'intérêt du réservoir Rv de véhicule dans le réservoir de réserve Rsᵣ, par simple détente du fluide ou par compression via 21.1. Cependant, il peut être avantageux que l'approvisionnement se fasse par transfert du fluide d'intérêt directement du réservoir Rv de véhicule au réservoir de distribution Rs_{d} en passant par le compresseur 21.2, et non pas via le réservoir de réserve Rsᵣ, pour ainsi limiter les pertes énergétiques liées à une détente suivie d'une compression du fluide d'intérêt transféré du réservoir de réserve Rsᵣ de pression cible Ps_{c,r} (200 bars, par ex.) au réservoir de distribution Rs_{d} de pression cible Ps_{c,d} (450 bars, par ex.).

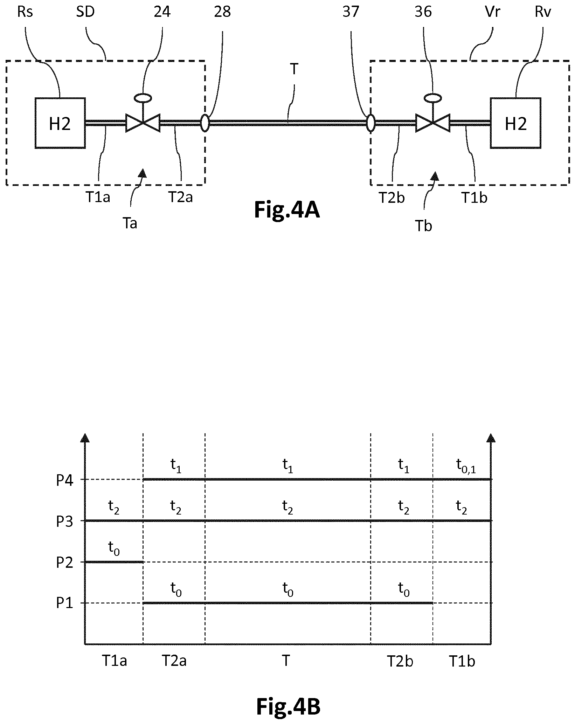

La figure 4A illustre de manière partielle et schématique un exemple de réservoir Rs d'une station de distribution SD et un réservoir Rv d'un véhicule référencé Vr, les réservoirs étant reliés l'un à l'autre par un organe d'approvisionnement par détente du fluide d'intérêt contenu dans le réservoir Rv de véhicule. Le réservoir Rs peut être un réservoir de réserve Rsᵣ ou un réservoir de distribution Rs_{d}.

Dans cet exemple, le réservoir Rs est relié à une prise de couplage 28 par une vanne commandable 24. Le réservoir Rv de véhicule est relié à une prise de couplage 37 par une vanne commandable 36. L'organe d'approvisionnement est formé d'un tuyau souple T dont les extrémités comportent des fiches de couplage, ces dernières étant introduites dans les prises de couplage 28, 37, de préférence de manière étanche. Un tuyau Ta formé des parties T1a et T2a, reliées par une vanne 24, assure la liaison fluidique entre le réservoir Rs et la prise 28. De même, un tuyau Tb formé des parties T1b et T2b, reliées par une vanne 36, assure la liaison fluidique entre le réservoir Rv et la prise 37.

La figure 4B illustre un diagramme illustrant l'évolution temporelle de la pression du fluide d'intérêt à différents instants de l'approvisionnement. L'abscisse représente les différentes parties des tuyaux de couplage fluidique Ta, T, Tb, et l'ordonnée représente la pression aux différents instants.

A l'instant initial to, la pression dans le réservoir Rs est égale à P2 et est inférieure à la pression P4 dans le réservoir Rv de véhicule. A titre d'exemple, la pression P2 peut être égale à 200 bars et la pression P4 peut être égale à 350 bars. Les vannes 24, 36 sont fermées, de sorte que la pression dans la partie T1a est égale à P2 et la pression dans la partie T1b est égale à P4. La pression dans les tuyaux T2a, T et T2b peut être égale à une valeur de pression P1 de repos, par exemple la pression atmosphérique. Le tuyau T est couplé aux tuyaux T2a et T2b, ici de manière étanche. Les tuyaux T2a, T et T2b constituent un volume de liaison V_{T} délimité par les deux vannes.

A l'instant t1, la vanne 36 est ouverte, de manière à laisser passer du fluide d'intérêt du réservoir Rv de véhicule vers le volume V_{T}. La vanne 36 est par exemple en mode régulation, non totalement ouverte, de sorte à limiter le débit d'échange, si nécessaire, notamment pour éviter les échauffements. La pression P4 dans le réservoir Rv de véhicule étant supérieure à la pression P1 dans le volume V_{T}, une partie du fluide est transféré du réservoir Rv de véhicule vers le volume V_{T}. Le volume du réservoir Rv de véhicule étant dans cet exemple significativement supérieur au volume V_{T}, la pression dans le volume V_{T} et le réservoir Rv de véhicule est sensiblement égale à la valeur P4 à l'instant t1.

A l'instant t2, la vanne 24 est ouverte, de manière à permettre l'écoulement du fluide d'intérêt du volume V_{T} vers le réservoir. La vanne 24 peut être en mode régulation de débit, pour éviter les échauffements lors de l'approvisionnement. La pression P4 dans le volume V_{T} et le réservoir Rv de véhicule étant supérieure à la pression P2 dans le tuyau T1a et le réservoir, le fluide d'intérêt s'écoule du volume V_{T} dans le tuyau T1a et dans le réservoir Rs. Ainsi, la pression dans le réservoir Rs augmente et celle dans le réservoir Rv de véhicule diminue, jusqu'à une pression d'équilibre P₃. Cette pression d'équilibre P₃ peut correspondre à la pression souhaitée dans le réservoir Rs (de pression cible Ps_{c,r}) ou dans le réservoir Rv de véhicule (de pression effective Pv_{eff}). Au terme de l'approvisionnement, le transfert de fluide est terminé, et les vannes 24, 36 sont fermées et le tuyau T est découplé de la prise 37 du véhicule référencé Vr après une purge et une détente non représentée ici.

Le procédé de contrôle des vannes précédemment décrit peut être mis en œuvre au moyen de dispositifs de commande (non représentés) pilotant les vannes. Les dispositifs de commande peuvent être autonomes ou éventuellement reliés l'un à l'autre pour une meilleure coordination et un partage d'informations. Chaque dispositif de commande comprend par exemple des capteurs de pression leur permettant de connaître les pressions dans les tuyaux Ta et Tb de leur unité. En outre, un dispositif de commande peut comprendre un détecteur de connexion lui permettant de savoir qu'un tuyau T est connecté sur la prise de couplage de son unité.

Des modes de réalisation particuliers viennent d'être décrits. Différentes variantes et modifications apparaîtront à l'homme du métier.

D'autres procédés de commande peuvent être mis en œuvre par les dispositifs de commande des vannes précédemment décrits. En outre, le procédé de commande peut s'appuyer sur d'autres informations issues d'autres capteurs, par exemple un capteur de température, un capteur de la nature du fluide, une évaluation du débit de fluide. En outre, la station SD et le véhicule référence Vr et/ou les tuyaux (T ou Ta/Tb) et/ou la pièce de jonction peuvent être munis de dispositifs d'identification, telle qu'une puce RFID, permettant de sécuriser les connexions, en autorisant uniquement le transfert de fluide pour certaines unités, véhicules, stations ou tuyaux.

Par ailleurs, un véhicule référencé 'client' peut être rempli en fluide d'intérêt à partir d'un véhicule référencé 'approvisionneur' sans que le fluide d'intérêt transféré ne s'écoule via le réservoir de distribution. Le fluide d'intérêt peut cependant circuler dans les organes de remplissage 50 de la station de distribution SD pour des raisons de sécurité. Une fiche de couplage peut être prévue entre la sortie du réservoir de distribution Rs_{d} et la vanne 24 ou le dispositif de gestion thermique 26. Ainsi, le véhicule référencé approvisionneur Vrₐ peut avoir son réservoir Rv de véhicule relié fluidiquement à la fiche de couplage en question, et le véhicule référencé client Vr_{c} peut avoir son réservoir Rv de véhicule relié fluidiquement à ladite fiche de couplage par un organe de remplissage 50, de sorte que le fluide d'intérêt puisse s'écouler en toute sécurité entre le réservoir du véhicule Vrₐ vers le réservoir du véhicule Vr_{c}. Ainsi, le débit de transfert fluidique peut être contrôlé de manière à ne pas surchauffer le réservoir receveur. Un tel échange entre véhicules peut par exemple permettre une opération de dépannage lorsqu'un véhicule a un réservoir de fluide insuffisamment rempli.

Par ailleurs, les stations de distribution SD et éventuellement les véhicules référencés Vr peuvent comprendre plusieurs réservoirs à des pressions différentes afin d'optimiser globalement le travail de compression nécessaire à la montée en pression dans les réservoirs. En effet, chaque transfert de fluide supplémentaire pour le transfert d'un réservoir vers un autre réservoir, entre la station SD et le véhicule Vr, par détente du fluide, induit une perte d'énergie correspondant à un travail de compression qui a été fourni au préalable par un compresseur et qui est perdu au remplissage par détente. Autrement dit, on cherche à éviter des grandes variations de pression au sein d'un même réservoir, le travail perdu étant lié à l'écart de pression entre le début et la fin de la détente.

Par ailleurs, comme mentionné précédemment, le fluide d'intérêt peut être un gaz comprimé voire un liquide. Dans ce dernier cas, le remplissage d'un réservoir Rv de véhicule à partir d'un réservoir de distribution Rs_{d}, et inversement, peut être effectué au moins par gravité, c'est-à-dire avec l'aide ou non d'une pompe ou d'une légère surpression de gaz provoquant le transfert du liquide.

## Revendications

1. Procédé de gestion d'un système de distribution (1) d'un fluide d'intérêt comportant :
∘ une pluralité de stations de distribution (SD) du fluide d'intérêt, comportant chacune au moins un réservoir (Rs) du fluide d'intérêt, et une jauge (22) de contenance dudit réservoir (Rs) de station ;
∘ une pluralité de véhicules dits référencés (Vr), comportant chacun au moins un réservoir (Rv) du fluide d'intérêt, une jauge (32) de contenance dudit réservoir (Rv) de véhicule, une pile à combustible (FC) alimentée par ledit réservoir (Rv) de véhicule, et un dispositif de communication (33) adapté à recevoir une requête d'approvisionnement ;
∘ les stations de distribution (SD) et les véhicules référencés (Vr) étant configurés pour permettre le remplissage des réservoirs (Rv) de véhicule à partir des réservoirs (Rs) de station, et l'approvisionnement des réservoirs (Rs) de station à partir des réservoirs (Rv) de véhicule ;
le procédé comportant les étapes suivantes :
a. mesure, pour chaque station de distribution (SD), d'au moins une valeur de contenance (Ps_{eff}) du réservoir (Rs) de station, et détermination d'une valeur d'une première grandeur (Ps_{eff}, Ps_{f}) représentative de la contenance du réservoir (Rs) de station à partir d'au moins la valeur de contenance (Ps_{eff}) mesurée,
b. identification d'une station de distribution (SD_{d}) dite déficitaire, par comparaison entre au moins les valeurs de la première grandeur représentative (Ps_{eff}; Ps_{f}) et au moins un premier seuil prédéterminé (Ss_{inf}) représentatif d'une station de distribution déficitaire (SD_{d}) ;
c. mesure, pour chaque véhicule référencé (Vr), d'au moins une valeur de contenance (Pv_{eff}) du réservoir (Rv) de véhicule, et détermination d'une valeur d'une deuxième grandeur (Pv_{eff}, Pv_{f}) représentative de la contenance du réservoir (Rv) de véhicule à partir d'au moins la valeur de contenance (Pv_{eff}) mesurée,
d. identification d'un véhicule référencé (Vrₐ) dit approvisionneur, par comparaison entre au moins les valeurs de la deuxième grandeur représentative (Pv_{eff}; Pv_{f}) et au moins un deuxième seuil prédéterminé (Svₛᵤₚ) représentatif d'un véhicule référencé (Vrₐ) approvisionneur ;
e. envoi au véhicule référencé approvisionneur (Vrₐ) d'une requête d'approvisionnement du réservoir (Rsd) de la station de distribution déficitaire (SD_{d}) à partir de son réservoir (Rv) de véhicule.

2. Procédé de gestion selon la revendication 1, dans lequel le système de gestion (1) comporte en outre un dispositif de gestion (DG) comprenant :
∘ un dispositif de communication (43) adapté à recevoir des valeurs émises par les stations de distribution (SD) et par les véhicules référencés (Vr) et à envoyer une requête d'approvisionnement aux véhicules référencés (Vr), et
∘ un dispositif électronique de traitement (40), connecté au dispositif de communication (43), comportant un processeur (41) et une mémoire (42), et adapté à identifier une station de distribution déficitaire (SD_{d}) lors de l'étape b, et un véhicule référencé approvisionneur (Vrₐ) lors de l'étape d ;
les stations de distributions (SD) comportant en outre un dispositif de communication (23) adapté à transmettre au dispositif de gestion (DG) une valeur représentative de la contenance mesurée par la jauge (22) de station, et le dispositif de communication (33) des véhicules référencés (Vr) étant en outre adapté à transmettre au dispositif de gestion (DG) une valeur représentative de la contenance mesurée par la jauge (32) de véhicule.

3. Procédé de gestion selon la revendication 1 ou 2, dans lequel, lors de l'étape b, une station de distribution (SD) est identifiée comme étant déficitaire (SD_{d}) lorsqu'au moins une valeur de la première grandeur représentative (Ps_{eff};Ps_{f}) associée à ladite station de distribution (SD) est inférieure ou égale à la première valeur seuil prédéterminée (Ss_{inf}).

4. Procédé de gestion selon l'une quelconque des revendications 1 à 3, dans lequel, lors de l'étape d, un véhicule référencé (Vr) est identifié comme étant approvisionneur (Vrₐ) lorsqu'au moins une valeur de la deuxième grandeur représentative (Ps_{eff};Ps_{f}) associée audit véhicule référencé (Vr) est supérieure ou égale à la deuxième valeur seuil prédéterminée (Svₛᵤₚ).

5. Procédé de gestion selon l'une quelconque des revendications 1 à 4, dans lequel la première grandeur (Ps_{eff};Ps_{f}) et/ou la deuxième grandeur (Ps_{eff};Ps_{f}) sont représentatives de la contenance à un instant de mesure ou à un instant ultérieur.

6. Procédé de gestion selon l'une quelconque des revendications 1 à 5, dans lequel :
∘ l'étape c comporte également la détermination, pour chaque véhicule référencé (Vr), des trajets futurs prévus ainsi que de la date desdits trajets futurs, et
∘ l'étape d d'identification d'un véhicule référencé approvisionneur (Vrₐ) est effectuée, en outre, à partir d'un critère supplémentaire de minimisation d'une distance de la station de distribution déficitaire (SDₐ) vis-à-vis desdits différents trajets futurs prévus et/ou à partir d'un critère supplémentaire d'identification portant sur la date desdits trajets futurs.

7. Procédé de gestion selon l'une quelconque des revendications 1 à 6, dans lequel :
∘ le fluide d'intérêt est un gaz comprimé et les réservoirs (Rs) de station autorisent une pression maximale (Ps_{c,d}) supérieure à une pression maximale (Pv_{c}) des réservoirs (Rv) de véhicule,
∘ l'étape d comporte en outre un calcul d'une différence de pression (ΔP_{d/v}) entre la pression maximale (Ps_{c,d}) de la station de distribution déficitaire (SD_{d}) et la valeur de contenance (Pv_{eff}) mesurée de chaque véhicule référencé (Vr), suivi de l'identification d'un véhicule référencé approvisionneur (Vrₐ) à partir d'un critère supplémentaire de minimisation de la différence de pression (ΔP_{d/v}),
le procédé comportant en outre une étape d'approvisionnement de la station de distribution déficitaire (SD_{d}) en fluide d'intérêt par le véhicule référencé approvisionneur (Vrₐ), au cours de laquelle le fluide d'intérêt est comprimé par un compresseur (21.2) en passant du réservoir (Rv) de véhicule au réservoir (Rs) de station.

8. Procédé de gestion selon la revendication 7, dans lequel :
∘ la station de distribution déficitaire (SD_{d}) comportant au moins un premier réservoir dit de réserve (Rsᵣ) relié à un deuxième réservoir dit de distribution (Rs_{d}) par l'intermédiaire d'un compresseur (21.2), le réservoir de réserve (Rsᵣ) autorisant une pression maximale (Ps_{c,r}) du fluide d'intérêt inférieure à la pression maximale (Ps_{c,d}) dudit réservoir de distribution (Rs_{d}),
∘ lors de l'étape d'approvisionnement, le réservoir de distribution (Rs_{d}) est approvisionné en fluide d'intérêt par le véhicule référencé approvisionneur (Vrₐ) via le compresseur (21.2) sans approvisionner au préalable le réservoir de réserve (Rsᵣ).

9. Procédé de gestion selon l'une quelconque des revendications 1 à 6, dans lequel :
∘ le fluide d'intérêt étant un gaz comprimé et les réservoirs (Rs) de station autorisant une pression maximale (Ps_{c,d}) supérieure à une pression maximale (Pv_{c}) des réservoirs (Rv) de véhicule,
∘ la station de distribution (SD) déficitaire comportant au moins un premier réservoir dit de réserve (Rsᵣ), relié à un deuxième réservoir dit de distribution (Rs_{d}) par l'intermédiaire d'un compresseur (21.2), le réservoir de réserve (Rsᵣ) autorisant une pression maximale (Ps_{c,r}) du fluide d'intérêt inférieure à la pression maximale (Ps_{c,d}) dudit réservoir de distribution (Rs_{d}),
∘ l'étape d comporte en outre un calcul d'une deuxième différence de pression (ΔP_{r/v}) entre la pression maximale (Ps_{c,r}) du réservoir de réserve (Rsᵣ) de la station de distribution (SD) déficitaire et la valeur de contenance (Pv_{eff}) mesurée de chaque véhicule référencé (Vr), suivi de l'identification d'un véhicule référencé approvisionneur (Vrₐ) à partir d'un critère supplémentaire de minimisation de la deuxième différence de pression (ΔP_{r/v}),
∘ lors de l'étape e, la requête envoyée invite le véhicule référencé approvisionneur (Vrₐ) à approvisionner le réservoir de réserve (Rsᵣ) en fluide d'intérêt.

10. Procédé de gestion selon l'une quelconque des revendications 1 à 6, le fluide d'intérêt contenu dans les réservoirs (Rs) de station et dans les réservoirs (Rv) de véhicule étant un liquide, dans lequel, lors d'une étape d'approvisionnement de la station de distribution déficitaire (SD_{d}) par le véhicule référencé approvisionneur (Vrₐ), le réservoir (Rv) de véhicule est connecté au réservoir (Rs) de station de manière à permettre l'écoulement du fluide d'intérêt au moins par gravité.

11. Système de distribution (1) d'un fluide d'intérêt, comportant :
∘ une pluralité de stations de distribution (SD) du fluide d'intérêt comportant chacune au moins un réservoir (Rs) du fluide d'intérêt, une jauge (22) de contenance connectée dudit réservoir (Rs) de station, et un dispositif de communication (23) adapté à transmettre une valeur représentative de la contenance mesurée par la jauge (22) de station ;
∘ une pluralité de véhicules dits référencés (Vr) comportant chacun au moins un réservoir (Rv) du fluide d'intérêt, une jauge (32) de contenance dudit réservoir (Rv) de véhicule, une pile à combustible (FC) alimentée par ledit réservoir (Rv) de véhicule, et un dispositif de communication (33) adapté à transmettre une valeur représentative de la contenance mesurée par la jauge (32) de véhicule et à recevoir une requête d'approvisionnement ;
∘ les stations de distribution (SD) et les véhicules référencés (Vr) étant configurés pour permettre le remplissage des réservoirs (Rv) de véhicule à partir des réservoirs (Rs) de station, et l'approvisionnement des réservoirs (Rs) de station à partir des réservoirs (Rv) de véhicule ;
∘ un dispositif de gestion (DG) comprenant un dispositif de communication (43) adapté à recevoir des valeurs émises par les stations de distribution (SD) et par les véhicules référencés (Vr) et à envoyer une requête d'approvisionnement aux véhicules référencés (Vr), et un dispositif électronique de traitement (40), connecté au dispositif de communication (43), et comportant un processeur (41) et une mémoire (42), et adapté à identifier une station de distribution déficitaire (SD_{d}) à partir de valeurs reçues par les jauges (22) de station, et un véhicule référencé approvisionneur (Vrₐ) à partir de valeurs reçues par les jauges (32) de véhicule.

12. Système de distribution (1) selon la revendication 11, dans lequel chaque réservoir (Rs) de station comporte une sortie destinée à fournir du fluide d'intérêt aux véhicules référencés (Vr), et une entrée reliée à un compresseur (21.2), l'entrée étant destinée à recevoir du fluide d'intérêt d'un véhicule référencé approvisionneur (Va) par l'intermédiaire du compresseur (21.2).

13. Système de distribution (1) selon la revendication 12, dans lequel chaque station de distribution (SD) comporte au moins un premier réservoir dit de réserve (Rsᵣ) relié à un deuxième réservoir dit de distribution (Rs_{d}) par l'intermédiaire dudit compresseur (21.2), ce dernier étant en outre adapté à transférer du fluide du réservoir de réserve (Rsᵣ) au réservoir de distribution (Rs_{d}) en le portant à une pression maximale (Ps_{c,d}) prédéterminée.

14. Système de distribution (1) selon l'une quelconque des revendications 11 à 13, comportant un organe de remplissage (50) et un organe d'approvisionnement (60) adaptés à assurer un transfert du fluide d'intérêt entre une station de distribution (SD) et un véhicule référencé (Vr), lesdits organes de remplissage et d'approvisionnement (50, 60, 70) comportant au moins un tuyau (51, 61, 71) pouvant être assemblé en une extrémité à un réservoir (Rs_{d}) de station et pouvant être assemblé en l'autre extrémité au réservoir (Rv) de véhicule.

15. Système de distribution (1) selon la revendication 14, dans lequel les stations de distribution (SD) et les véhicules référencés (Vr) comportent au moins une vanne commandable (24.1, 24.2, 35.1, 35.2, 36) pour autoriser ou non l'écoulement du fluide d'intérêt dans le tuyau (51, 61, 71).

## Patentansprüche

1. Verwaltungsverfahren eines Verteilungssystems (1) eines gewünschten Fluids, das Folgendes umfasst:
o eine Vielzahl von Verteilungsstationen (SD) des gewünschten Fluids, die jeweils mindestens einen Tank (Rs) des gewünschten Fluids und einen Inhaltsmesser (22) des Stationstanks (Rs) umfassen;
o eine Vielzahl von sogenannten erfassten Fahrzeugen (Vr), die jeweils mindestens einen Tank (Rv) des gewünschten Fluids, einen Inhaltsmesser (32) des Fahrzeugtanks (Rv), eine Brennstoffzelle (FC), die durch den Fahrzeugtank (Rv) versorgt wird, und eine Kommunikationsvorrichtung (33), die dazu ausgelegt ist, eine Belieferungsanfrage zu empfangen, umfassen;
o wobei die Verteilungsstationen (SD) und die erfassten Fahrzeuge (Vr) dazu konfiguriert sind, die Befüllung der Fahrzeugtanks (Rv) anhand der Stationstanks (Rs) und die Belieferung der Stationstanks (Rs) anhand der Fahrzeugtanks (Rv) zu ermöglichen;
wobei das Verfahren die folgenden Schritte umfasst:
a. Messen, für jede Verteilungsstation (SD), mindestens eines Inhaltswerts (Ps_{eff}) des Stationstanks (Rs) und Bestimmen eines Werts einer ersten Größe (Ps_{eff}, Psf), die für den Inhalt des Stationstanks (Rs) repräsentativ ist, anhand mindestens des gemessenen Inhaltswerts (Ps_{eff}),
b. Identifizieren einer sogenannten defizitären Verteilungsstation (SD_{d}) durch einen Vergleich zwischen mindestens den Werten der ersten repräsentativen Größe (Ps_{eff}; Psf) und mindestens einer ersten vorgegebenen Schwelle (Ssinf), die für eine defizitäre Verteilungsstation (SD_{d}) repräsentativ ist;
c. Messen, für jedes erfasste Fahrzeug (Vr), mindestens eines Inhaltswerts (Pv_{eff}) des Fahrzeugtanks (Rv) und Bestimmen eines Werts einer zweiten Größe (Pv_{eff}, Pvf), die für den Inhalt des Fahrzeugtanks (Rv) repräsentativ ist, anhand mindestens des gemessenen Inhaltswerts (Pv_{eff}),
d. Identifizieren eines sogenannten Belieferungsfahrzeugs (Vrₐ) durch einen Vergleich zwischen mindestens den Werten der zweiten repräsentativen Größe (Pv_{eff}; Pvf) und mindestens einer zweiten vorgegebenen Schwelle (Svₛᵤₚ), die für ein erfasstes Belieferungsfahrzeug (Vrₐ) repräsentativ ist;
e. Senden, an das erfasste Belieferungsfahrzeug (Vrₐ), einer Anfrage zur Belieferung des Tanks (Rsd) der defizitären Verteilungsstation (SD_{d}) anhand des Fahrzeugtanks (Rv).

2. Verwaltungsverfahren nach Anspruch 1, wobei das Verwaltungssystem (1) ferner eine Verwaltungsvorrichtung (DG) umfasst, die Folgendes beinhaltet:
o eine Kommunikationsvorrichtung (43), die dazu ausgelegt ist, durch die Verteilungsstationen (SD) und durch die erfassten Fahrzeuge (Vr) ausgegebene Werte zu empfangen und eine Belieferungsanfrage an die erfassten Fahrzeuge (Vr) zu senden, und
o eine elektronische Verarbeitungsvorrichtung (40), die mit der Kommunikationsvorrichtung (43) verbunden ist, einen Prozessor (41) und einen Speicher (42) umfasst und dazu ausgelegt ist, während des Schritts b eine defizitäre Verteilungsstation (SD_{d}) und während des Schritts d ein erfasstes Belieferungsfahrzeug (Vrₐ) zu identifizieren;
wobei die Verteilungsstationen (SD) ferner eine Kommunikationsvorrichtung (23) umfassen, die dazu ausgelegt ist, einen Wert, der für den durch den Stationsmesser (22) gemessenen Inhalt repräsentativ ist, an die Verwaltungsvorrichtung (DG) zu übertragen, und wobei die Kommunikationsvorrichtung (33) der erfassten Fahrzeuge (Vr) ferner dazu ausgelegt ist, einen Wert, der für den durch den Fahrzeugmesser (32) gemessenen Inhalt repräsentativ ist, an die Verwaltungsvorrichtung (DG) zu übertragen.

3. Verwaltungsverfahren nach Anspruch 1 oder 2, wobei während des Schritts b eine Verteilungsstation (SD) als defizitär (SD_{d}) identifiziert wird, wenn mindestens ein Wert der ersten repräsentativen Größe (Ps_{eff}; Psf), die mit der Verteilungsstation (SD) assoziiert ist, kleiner als oder gleich dem ersten vorgegebenen Schwellenwert (Ssinf) ist.

4. Verwaltungsverfahren nach einem der Ansprüche 1 bis 3, wobei während des Schritts d ein erfasstes Fahrzeug (Vr) als Belieferungsfahrzeug (Vrₐ) identifiziert wird, wenn mindestens ein Wert der zweiten repräsentativen Größe (Ps_{eff}; Psf), die mit dem erfassten Fahrzeug (Vr) assoziiert ist, größer als oder gleich dem zweiten vorgegebenen Schwellenwert (Svₛᵤₚ) ist.

5. Verwaltungsverfahren nach einem der Ansprüche 1 bis 4, wobei die erste Größe (Ps_{eff}; Psf) und/oder die zweite Größe (Ps_{eff}; Psf) für den Inhalt zu einem Messzeitpunkt oder zu einem späteren Zeitpunkt repräsentativ sind.

6. Verwaltungsverfahren nach einem der Ansprüche 1 bis 5, wobei:
o der Schritt c auch das Bestimmen, für jedes erfasste Fahrzeug (Vr), der geplanten zukünftigen Fahrten sowie des Datums der zukünftigen Fahrten umfasst und
o der Schritt d des Identifizierens eines erfassten Belieferungsfahrzeugs (Vrₐ) ferner anhand eines zusätzlichen Kriteriums zur Minimierung eines Abstands der defizitären Verteilungsstation (SDₐ) im Hinblick auf die unterschiedlichen geplanten zukünftigen Fahrten und/oder anhand eines zusätzlichen Identifizierungskriteriums, das sich auf das Datum der zukünftigen Fahrten bezieht, vorgenommen wird.

7. Verwaltungsverfahren nach einem der Ansprüche 1 bis 6, wobei:
o das gewünschte Fluid ein komprimiertes Gas ist und die Stationstanks (Rs) einen maximalen Druck (Ps_{c,d}) zulassen, der höher als ein maximaler Druck (Pv_{c}) der Fahrzeugtanks (Rv) ist,
o der Schritt d ferner eine Berechnung einer Druckdifferenz (ΔP_{d/v}) zwischen dem maximalen Druck (Ps_{c,d}) der defizitären Verteilungsstation (SD_{d}) und dem gemessenen Inhaltswert (Pv_{eff}) jedes erfassten Fahrzeugs (Vr) umfasst, gefolgt von der Identifizierung eines erfassten Belieferungsfahrzeugs (Vrₐ) anhand eines zusätzlichen Kriteriums zur Minimierung der Druckdifferenz (ΔP_{d/v}),
wobei das Verfahren ferner einen Schritt der Belieferung der defizitären Verteilungsstation (SD_{d}) mit dem gewünschten Fluid durch das erfasste Belieferungsfahrzeug (Vrₐ) umfasst, während dessen das gewünschte Fluid auf dem Weg vom Fahrzeugtank (Rv) zum Stationstank (Rs) durch einen Kompressor (21.2) komprimiert wird.

8. Verwaltungsverfahren nach Anspruch 7, wobei:
o die defizitäre Verteilungsstation (SD_{d}) mindestens einen ersten sogenannten Reservetank (Rsᵣ) umfasst, der über einen Kompressor (21.2) mit einem zweiten sogenannten Verteilungstank (Rs_{d}) verbunden ist, wobei der Reservetank (Rsᵣ) einen maximalen Druck (Ps_{c,r}) des gewünschten Fluids zulässt, der niedriger als der maximale Druck (Ps_{c,d}) des Verteilungstanks (Rs_{d}) ist,
o während des Schritts der Belieferung der Verteilungstank (Rs_{d}) durch das erfasste Belieferungsfahrzeug (Vrₐ) über den Kompressor (21.2) mit dem gewünschten Fluid beliefert wird, ohne dass vorher der Reservetank (Rsᵣ) beliefert wird.

9. Verwaltungsverfahren nach einem der Ansprüche 1 bis 6, wobei:
o das gewünschte Fluid ein komprimiertes Gas ist und die Stationstanks (Rs) einen maximalen Druck (Ps_{c,d}) zulassen, der höher als ein maximaler Druck (Pv_{c}) der Fahrzeugtanks (Rv) ist,
o die defizitäre Verteilungsstation (SD) mindestens einen ersten sogenannten Reservetank (Rsᵣ) umfasst, der über einen Kompressor (21.2) mit einem zweiten sogenannten Verteilungstank (Rs_{d}) verbunden ist, wobei der Reservetank (Rsᵣ) einen maximalen Druck (Ps_{c,r}) des gewünschten Fluids zulässt, der niedriger als der maximale Druck (Ps_{c,d}) des Verteilungstanks (Rs_{d}) ist,
o der Schritt d ferner eine Berechnung einer zweiten Druckdifferenz (ΔP_{r/v}) zwischen dem maximalen Druck (Ps_{c,r}) des Reservetanks (Rsᵣ) der defizitären Verteilungsstation (SD) und dem gemessenen Inhaltswert (Pv_{eff}) jedes erfassten Fahrzeugs (Vr) umfasst, gefolgt von der Identifizierung eines erfassten Belieferungsfahrzeugs (Vrₐ) anhand eines zusätzlichen Kriteriums zur Minimierung der zweiten Druckdifferenz (ΔP_{r/v}),
o während des Schritts e die gesendete Anfrage das erfasste Belieferungsfahrzeug (Vrₐ) auffordert, den Reservetank (Rsᵣ) mit dem gewünschten Fluid zu beliefern.

10. Verwaltungsverfahren nach einem der Ansprüche 1 bis 6, wobei das in den Stationstanks (Rs) und in den Fahrzeugtanks (Rv) enthaltene gewünschte Fluid eine Flüssigkeit ist, wobei während eines Schritts der Belieferung der defizitären Verteilungsstation (SD_{d}) durch das erfasste Belieferungsfahrzeug (Vrₐ) der Fahrzeugtank (Rv) so mit dem Stationstank (Rs) verbunden ist, dass ein Strömen des gewünschten Fluids mindestens mittels Schwerkraft ermöglicht wird.

11. Verteilungssystem (1) eines gewünschten Fluids, das Folgendes umfasst:
o eine Vielzahl von Verteilungsstationen (SD) des gewünschten Fluids, die jeweils mindestens einen Tank (Rs) des gewünschten Fluids, einen verbundenen Inhaltsmesser (22) des Stationstanks (Rs) und eine Kommunikationsvorrichtung (23), die dazu ausgelegt ist, einen Wert, der für den durch den Stationsmesser (22) gemessenen Inhalt repräsentativ ist, zu übertragen, umfassen;
o eine Vielzahl von sogenannten erfassten Fahrzeugen (Vr), die jeweils mindestens einen Tank (Rv) des gewünschten Fluids, einen Inhaltsmesser (32) des Fahrzeugtanks (Rv), eine Brennstoffzelle (FC), die durch den Fahrzeugtank (Rv) versorgt wird, und eine Kommunikationsvorrichtung (33), die dazu ausgelegt ist, einen Wert, der für den durch den Fahrzeugmesser (32) gemessenen Inhalt repräsentativ ist, zu übertragen und eine Belieferungsanfrage zu empfangen, umfassen;
o wobei die Verteilungsstationen (SD) und die erfassten Fahrzeuge (Vr) dazu konfiguriert sind, die Befüllung der Fahrzeugtanks (Rv) anhand der Stationstanks (Rs) und die Belieferung der Stationstanks (Rs) anhand der Fahrzeugtanks (Rv) zu ermöglichen;
o eine Verwaltungsvorrichtung (DG), die Folgendes beinhaltet: eine Kommunikationsvorrichtung (43), die dazu ausgelegt ist, durch die Verteilungsstationen (SD) und durch die erfassten Fahrzeuge (Vr) ausgegebene Werte zu empfangen und eine Belieferungsanfrage an die erfassten Fahrzeuge (Vr) zu senden, und eine elektronische Verarbeitungsvorrichtung (40), die mit der Kommunikationsvorrichtung (43) verbunden ist und einen Prozessor (41) und einen Speicher (42) umfasst und dazu ausgelegt ist, eine defizitäre Verteilungsstation (SD_{d}) anhand von von den Stationsmessern (22) empfangenen Werten und ein erfasstes Belieferungsfahrzeug (Vrₐ) anhand von von den Fahrzeugmessern (32) empfangenen Werten zu identifizieren.

12. Verteilungssystem (1) nach Anspruch 11, wobei jeder Stationstank (Rs) einen Auslass, der dazu bestimmt ist, gewünschtes Fluid an die erfassten Fahrzeuge (Vr) zu liefern, und einen Einlass, der mit einem Kompressor (21.2) verbunden ist, umfasst, wobei der Einlass dazu bestimmt ist, gewünschtes Fluid über den Kompressor (21.2) von einem erfassten Belieferungsfahrzeug (Va) zu empfangen.

13. Verteilungssystem (1) nach Anspruch 12, wobei jede Verteilungsstation (SD) mindestens einen ersten sogenannten Reservetank (Rsᵣ) umfasst, der über den Kompressor (21.2) mit einem zweiten sogenannten Verteilungstank (Rs_{d}) verbunden ist, wobei der Kompressor ferner dazu ausgelegt ist, Fluid von dem Reservetank (Rsᵣ) zu dem Verteilungstank (Rs_{d}) zu transferieren und es dabei auf einen vorgegebenen maximalen Druck (Ps_{c,d}) zu bringen.

14. Verteilungssystem (1) nach einem der Ansprüche 11 bis 13, das eine Befüllungseinrichtung (50) und eine Belieferungseinrichtung (60) umfasst, die dazu ausgelegt sind, einen Transfer des gewünschten Fluids zwischen einer Verteilungsstation (SD) und einem erfassten Fahrzeug (Vr) sicherzustellen, wobei die Befüllungs- und die Belieferungseinrichtung (50, 60, 70) mindestens einen Schlauch (51, 61, 71) umfassen, der an einem Ende an einen Stationstank (Rs_{d}) angeschlossen werden kann und an dem anderen Ende an den Fahrzeugtank (Rv) angeschlossen werden kann.

15. Verteilungssystem (1) nach Anspruch 14, wobei die Verteilungsstationen (SD) und die erfassten Fahrzeuge (Vr) mindestens ein steuerbares Ventil (24.1, 24.2, 35.1, 35.2, 36) umfassen, um das Strömen des gewünschten Fluids in dem Schlauch (51, 61, 71) zu ermöglichen oder nicht.

## Claims

1. Method for managing a distribution system (1) for distributing a fluid of interest comprising:
∘ a plurality of distribution stations (SD) for distributing the fluid of interest, each comprising at least one tank (Rs) for the fluid of interest, and a gauge (22) for the capacity of said station tank (Rs);
∘ a plurality of what are referred to as referenced vehicles (Vr), each comprising at least one tank (Rv) for the fluid of interest, a gauge (32) for the capacity of said vehicle tank (Rv), a fuel cell (FC) supplied by said vehicle tank (Rv), and a communication device (33) suitable for receiving a supply request;
∘ the distribution stations (SD) and the referenced vehicles (Vr) being configured to allow the filling of the vehicle tanks (Rv) from the station tanks (Rs), and the supplying of the station tanks (Rs) from vehicle tanks (Rv);
the method comprising the following steps:
a. measuring, for each distribution station (SD), at least one capacity value (Ps_{eff}) of the station tank (Rs), and determining a value of a first quantity (Ps_{eff}, Psf) representative of the capacity of the station tank (Rs) from at least the measured capacity value (Ps_{eff}),
b. identifying a distribution station (SD_{d}) referred to as in deficit, by comparing at least the values of the first representative quantity (Ps_{eff}; Psf) and at least a first predetermined threshold (Ssinf) representative of a distribution station in deficit (SD_{d});
c. measuring, for each referenced vehicle (Vr), at least one capacity value (Pv_{eff}) of the vehicle tank (Rv), and determining a value of a second quantity (Pv_{eff}, Pv_{f}) representative of the tank capacity (Rv) of the vehicle from at least the measured capacity value (Pveff),
d. identifying a referenced vehicle (Vrₐ) referred to as a supplier, by comparing at least the values of the second representative quantity (Pv_{eff}; Pv_{f}) and at least a second predetermined threshold (Svₛᵤₚ) representative of a supplier referenced vehicle (Vrₐ);
e. sending the supplier referenced vehicle (Vrₐ) a supply request (Rsd) to supply the tank of the distribution station in deficit (SD_{d}) from its vehicle tank (Rv).

2. Management method according to Claim 1, wherein the management system (1) further includes a management device (DG) comprising:
∘ a communication device (43) suitable for receiving values transmitted by the distribution stations (SD) and by the referenced vehicles (Vr) and for sending a supply request to the referenced vehicles (Vr), and
∘ an electronic processing device (40), connected to the communication device (43), comprising a processor (41) and a memory (42), and suitable for identifying a distribution station in deficit (SD_{d}) in step b, and a supplier referenced vehicle (Vrₐ) in step d;
the distribution stations (SD) further comprising a communication device (23) suitable for transmitting to the management device (DG) a value representative of the capacity measured by the station gauge (22), and the communication device (33) of the referenced vehicles (Vr) being further suitable for transmitting to the management device (DG) a value representative of the capacity measured by the vehicle gauge (32).

3. Management method according to Claim 1 or 2, wherein, in step b, a distribution station (SD) is identified as being in deficit (SD_{d}) when at least one value of the first representative quantity (Ps_{eff}; Psf) associated with said distribution station (SD) is lower than or equal to the first predetermined threshold value (Ssinf).

4. Management method according to any one of Claims 1 to 3, wherein, in step d, a referenced vehicle (Vr) is identified as being a supplier (Vrₐ) when at least one value of the second representative quantity (Ps_{eff}; Psf) associated with said referenced vehicle (Vr) is higher than or equal to the second predetermined threshold value (Svₛᵤₚ).

5. Management method according to any one of Claims 1 to 4, wherein the first quantity (Ps_{eff}; Psf) and/or the second quantity (Ps_{eff}; Psf) are representative of the capacity at a time of measurement or at a later time.

6. Management method according to any one of Claims 1 to 5, wherein:
∘ step c also comprises determining, for each referenced vehicle (Vr), the planned future journeys as well as the date of said future journeys, and
∘ step d of identifying a supplier referenced vehicle (Vrₐ) is carried out, moreover, on the basis of an additional criterion of minimizing a distance from the distribution station in deficit (SDₐ) with respect to said various planned future journeys and/or on the basis of an additional identification criterion relating to the date of said future journeys.

7. Management method according to any one of Claims 1 to 6, wherein:
∘ the fluid of interest is a compressed gas and the station tanks (Rs) allow a maximum pressure (Ps_{c,d}) higher than a maximum pressure (Pv_{c}) of the vehicle tanks (Rv),
∘ step d further comprises calculating a pressure difference (ΔP_{d/v}) between the maximum pressure (Ps_{c,d}) of the distribution station in deficit (SD_{d}) and the measured capacity value (Pv_{eff}) of each referenced vehicle (Vr), followed by identifying a supplier referenced vehicle (Vrₐ) on the basis of an additional criterion of minimizing the pressure difference (ΔP_{d/v}),
the method further comprising a step of supplying the distribution station in deficit (SD_{d}) with the fluid of interest via the supplier referenced vehicle (Vrₐ), during which the fluid of interest is compressed by a compressor (21.2) as it passes from the vehicle tank (Rv) to the station tank (Rs).

8. Management method according to Claim 7, wherein:
∘ the distribution station in deficit (SD_{d}) comprising at least a first what is referred to as a reserve tank (Rsᵣ) connected to a second what is referred to as a distribution tank (Rs_{d}) via a compressor (21.2), the reserve tank (Rsᵣ) allowing a maximum pressure (PS_{c,r}) of the fluid of interest lower than the maximum pressure (Ps_{c,d}) of said distribution tank (Rs_{d}),
∘ in the supply step, the distribution tank (Rs_{d}) is supplied with the fluid of interest by the supplier referenced vehicle (Vrₐ) via the compressor (21.2) without supplying the reserve tank (Rsᵣ) beforehand.

9. Management method according to any one of Claims 1 to 6, wherein:
∘ the fluid of interest being a compressed gas and the station tanks (Rs) allowing a maximum pressure (Ps_{c,d}) higher than a maximum pressure (Pv_{c}) of the vehicle tanks (Rv),
∘ the distribution station (SD) in deficit comprising at least a first what is referred to as a reserve tank (Rsᵣ), connected to a second what is referred to as a distribution tank (Rs_{d}) via a compressor (21.2), the reserve tank (Rsᵣ) allowing a maximum pressure (PS_{c,r}) of the fluid of interest lower than the maximum pressure (Ps_{c,d}) of said distribution tank (Rs_{d}),
∘ step d further comprises calculating a second pressure difference (ΔP_{r/v}) between the maximum pressure (PS_{c,r}) of the reserve tank (Rsᵣ) of the distribution station (SD) in deficit and the measured capacity value (Pv_{eff}) of each referenced vehicle (Vr), followed by identifying a supplier referenced vehicle (Vrₐ) on the basis of an additional criterion of minimizing the second pressure difference (ΔP_{r/v}),
∘ in step e, the request sent prompts the supplier referenced vehicle (Vrₐ) to supply the reserve tank (Rsᵣ) with the fluid of interest.

10. Management method according to any one of Claims 1 to 6, the fluid of interest contained in the station tanks (Rs) and in the vehicle tanks (Rv) being a liquid, wherein, in a step of supplying the distribution station in deficit (SD_{d}) via the supplier referenced vehicle (Vrₐ), the vehicle tank (Rv) is connected to the station tank (Rs) so as to allow the fluid of interest to flow at least by gravity.

11. Distribution system (1) for distributing a fluid of interest, comprising:
∘ a plurality of distribution stations (SD) for distributing the fluid of interest, each comprising at least one tank (Rs) for the fluid of interest, a capacity gauge (22) connected to said station tank (Rs), and a communication device (23) suitable for transmitting a value representative of the capacity measured by the station gauge (22);
∘ a plurality of what are referred to as referenced vehicles (Vr), each comprising at least one tank (Rv) for the fluid of interest, a gauge (32) for the capacity of said vehicle tank (Rv), a fuel cell (FC) supplied by said vehicle tank (Rv), and a communication device (33) suitable for transmitting a value representative of the capacity measured by the vehicle gauge (32) and for receiving a supply request;
∘ the distribution stations (SD) and the referenced vehicles (Vr) being configured to allow the filling of the vehicle tanks (Rv) from the station tanks (Rs), and the supplying of the station tanks (Rs) from vehicle tanks (Rv);
∘ a management device (DG) comprising a communication device (43) suitable for receiving values transmitted by the distribution stations (SD) and by the referenced vehicles (Vr) and for sending a supply request to the referenced vehicles (Vr), and an electronic processing device (40), connected to the communication device (43), and comprising a processor (41) and a memory (42), and suitable for identifying a distribution station in deficit (SD_{d}) on the basis of values received by the station gauges (22), and a supplier referenced vehicle (Vrₐ) on the basis of values received by the vehicle gauges (32).

12. Distribution system (1) according to Claim 11, wherein each station tank (Rs) has an outlet for supplying the fluid of interest to the referenced vehicles (Vr), and an inlet connected to a compressor (21.2), the inlet being for receiving the fluid of interest from a supplier referenced vehicle (Va) via the compressor (21.2).

13. Distribution system (1) according to Claim 12, wherein each distribution station (SD) comprises at least a first what is referred to as a reserve tank (Rsᵣ) connected to a second what is referred to as a "distribution" tank (Rs_{d}) via said compressor (21.2), the latter further being suitable for transferring fluid from the reserve tank (Rsᵣ) to the distribution tank (Rs_{d}) by bringing it to a predetermined maximum pressure (Ps_{c,d}).

14. Distribution system (1) according to any one of Claims 11 to 13, comprising a filling member (50) and a supply member (60) suitable for providing transfer of the fluid of interest between a distribution station (SD) and a referenced vehicle (Vr), said filling and supply members (50, 60, 70) comprising at least one pipe (51, 61, 71) which can be joined at one end to a station tank (Rs_{d}) and can be joined at the other end to the vehicle tank (Rv).

15. Distribution system (1) according to Claim 14, wherein the distribution stations (SD) and the referenced vehicles (Vr) include at least one controllable valve (24.1, 24.2, 35.1, 35.2, 36) for allowing or preventing the flow of the fluid of interest through the pipe (51, 61, 71).
